# EUROPEAN PATENT APPLICATION

(11) **EP 4 847 946 A1**
(43) Date of publication of application: **02.12.2026**
(21) Application number: 25744488.5
(22) Date of filing: 15.01.2025
(51) Int. Cl.: G01S 7/48

(54) **BEAM SPLITTING DEVICE, BEAM COMBINING DEVICE, DETECTION DEVICE, LIDAR, AND TERMINAL**

(30) Priority: 25.01.2024 CN 202410111233
(71) Applicant: Yinwang Intelligent Technologies Co., Ltd., Shenzhen, Guangdong 518110 (CN)
(72) Inventor: TONG, Kainian, Shenzhen, Guangdong 518129 (CN); SHI, Zuchuan, Shenzhen, Guangdong 518129 (CN); HUA, Kangjian, Shenzhen, Guangdong 518129 (CN); ZHENG, Bin, Shenzhen, Guangdong 518129 (CN); LIU, Jun, Shenzhen, Guangdong 518129 (CN); XIAO, Xisheng, Shenzhen, Guangdong 518129 (CN)
(74) Representative: Gill Jennings & Every LLP
(86) International application number: PCT/CN2025/072443
(87) International publication number: WO 2025/157045

(57) **Abstract**

A beam splitting apparatus, a beam combining apparatus, a detection apparatus, a lidar, and a terminal are provided, and are used in the field of detection technologies. The beam splitting apparatus and the beam combining apparatus each include a third surface, a functional surface, a first reflective surface, a fourth surface, a second reflective surface, and a fifth surface. The fourth surface and the functional beam splitting surface are perpendicular to each other to form a first right angle, and the third surface and the first reflective surface are opposite to the first right angle. The fifth surface and the functional surface are also perpendicular to each other to form a second right angle, and the second reflective surface is opposite to the second right angle. The functional surface is configured to perform beam splitting and/or beam combining. In this application, optical paths for beam splitting and beam combining on the functional surface are similar, or even symmetric, so that light beams obtained through beam splitting have equal optical path lengths and have receiving surfaces that are coplanar, and/or, it is easy to combine two light beams when the two light beams have equal optical path lengths and have emitting surfaces that are coplanar. In addition, in this application, there is no need to mount an additional optical element, which facilitates miniaturization development of a device.

## Description

This application claims priority to Chinese Patent Application No. 202410111233.2, filed with the China National Intellectual Property Administration on January 25, 2024 and entitled "BEAM SPLITTING APPARATUS, BEAM COMBINING APPARATUS, DETECTION APPARATUS, LIDAR, AND TERMINAL", which is incorporated herein by reference in its entirety.

### TECHNICAL FIELD

This application relates to the field of detection technologies, and in particular, to a beam splitting apparatus, a beam combining apparatus, a detection apparatus, a lidar, and a terminal.

### BACKGROUND

An apparatus having a beam splitting capability (namely, a beam splitting apparatus) may split a light beam to obtain a plurality of output light beams, to improve integration of an optical device and improve quality of service. For example, in a security device, a beam splitting lens is used to separate visible light and infrared light for independent imaging. In comparison with a manner in which two sets of lenses are used to separately perform imaging, the former can simplify an overall structure of the device and reduce costs while achieving two imaging manners.

However, in a current beam splitting apparatus, receiving surfaces of two light beams obtained through beam splitting are usually not coplanar. If the receiving surfaces of the two split light beams need to be coplanar, an additional module needs be mounted outside the beam splitting apparatus. Consequently, a final structure is complex, which affects an overall size of a device. Particularly for an imaging light beam, receiving surfaces of two light beams obtained by splitting the imaging light beam are usually independent of each other. Therefore, receiving apparatuses of the two light beams need to be disposed on different circuit boards, leading to great mounting and adjustment difficulty.

In addition, in some scenarios in which two light beams need to be combined, it is difficult to combine two input light beams when emitting surfaces of the two input light beams are coplanar. Therefore, in a beam combining scenario in which emitting ends are independent of each other, problems that mounting and adjustment are difficult and an optical path structure is complex also exist.

### SUMMARY

This application provides a beam splitting apparatus, a beam combining apparatus, a detection apparatus, a lidar, and a terminal. According to the beam splitting apparatus in this application, two output light beams obtained by splitting a same light beam can have same optical path lengths and have receiving surfaces that are coplanar. In addition, there is no need to mount an additional optical element, thereby facilitating miniaturization development of a device. However, in the beam combining apparatus provided in this application, paths through which two light beams before being combined pass are similar, so that two light beams whose emitting surfaces are coplanar can be combined into one light beam and have same optical path lengths. In addition, there is no need to mount an additional optical element, thereby facilitating the miniaturization development of the device.

According to a first aspect, this application provides a beam splitting apparatus, including an incident surface, a beam splitting surface, a first reflective surface, a first exit surface, a second reflective surface, and a second exit surface. The first exit surface and the beam splitting surface form a first right angle, and both the incident surface and the first reflective surface are opposite to the first right angle. The second exit surface and the beam splitting surface form a second right angle, and the second reflective surface is opposite to the second right angle. The beam splitting surface is configured to reflect and transmit an incident light beam. The first reflective surface is configured to reflect a light beam reflected by the beam splitting surface. The second reflective surface is configured to reflect a light beam transmitted by the beam splitting surface.

In this application, structures of the incident surface, the beam splitting surface, and the two reflective surfaces of the beam splitting apparatus are designed, so that both the light beam reflected by the beam splitting surface and the light beam transmitted by the beam splitting surface are reflected by the reflective surface once. In this way, propagation paths of the two light beams obtained through splitting by the beam splitting surface are similar or even symmetric, so that the two light beams obtained through beam splitting have receiving surfaces that are coplanar, and optical path lengths of the two light beams obtained through beam splitting are the same.

When this application is applied to a receiving system, after an incident light beam passes through the beam splitting apparatus, two output light beams whose receiving surfaces are coplanar can be obtained, and the two light beams have equal optical path lengths. Therefore, the two receiving apparatuses corresponding to the two output light beams can be integrated into one module, for example, mounted on a same circuit board, so that difficulty of a manufacturing process can be reduced, complexity of mounting and adjustment can be greatly reduced, and time costs can be saved.

Certainly, this application can also be applied to an emitting system. In this case, a light beam emitted by an emitting apparatus passes through the beam splitting apparatus of this application to obtain two sub-beams having equal optical path lengths, thereby increasing a quantity of emission lines.

In a possible implementation of the first aspect, an included angle between the first reflective surface and the first exit surface is a second angle β. An included angle between the second reflective surface and the second exit surface is a third angle γ. The second angle β and the third angle γ satisfy: β = γ.

In the foregoing implementation, the second angle β is the same as the third angle γ. However, because an angle between the light beam reflected by the beam splitting surface and the beam splitting surface is the same as an angle between the light beam transmitted by the beam splitting surface and the beam splitting surface, propagation paths of the reflected light beam and the transmitted light beam are similar or even symmetric. When optical paths are similar, an incident angle of a light beam incident on the beam splitting surface is adjusted in a specific application, so that two light beams obtained through beam splitting have same optical path lengths and have receiving surfaces that are coplanar. Therefore, in the foregoing implementation, the two light beams obtained through beam splitting can have same optical path lengths and have receiving surfaces that are coplanar, and there is no need to mount an additional component.

In a possible implementation of the first aspect, an included angle between the incident surface and the beam splitting surface is a first angle α, and the included angle between the first reflective surface and the first exit surface is the second angle β. The first angle α and the second angle β satisfy: $90 ° + α = 2 β .$

In this implementation, due to an angular relationship between the first angle α and the second angle β, after a light beam perpendicular to the incident surface propagates to the beam splitting surface, a path of a light beam reflected by the beam splitting surface is similar to a path of a light beam transmitted by the beam splitting surface. It can be learned, based on the second angle β being equal to the third angle γ described above, that the reflected light beam and the transmitted light beam obtained through splitting by the beam splitting surface have same optical path lengths and have receiving surfaces that are coplanar.

The light beam is incident perpendicularly on the incident surface, which can reduce beam loss, avoid stray light, and improve effectiveness of a received signal. In the foregoing implementation, it can be achieved that after the light beam perpendicular to the incident surface passes through the beam splitting apparatus, two output light beams having same optical path lengths and having imaging surfaces that are coplanar are obtained.

In a possible implementation of the first aspect, the beam splitting apparatus is a prism. Further, the beam splitting apparatus includes two beam splitting prisms, which are referred to as a first prism and a second prism for ease of description. The first prism includes an incident surface, a first surface, a first reflective surface, and a first exit surface. The second prism includes a second surface, a second reflective surface, and a second exit surface. The first surface is attached to the second surface form a beam splitting surface. Use of the prism makes the surface easily fixed and formed, and angular relationships between the surfaces are stable, thereby improving manufacturing efficiency and improving reliability of the beam splitting apparatus. In addition, two beam splitting prisms that are separately disposed are attached to form the beam splitting apparatus, so that manufacturing difficulty of the beam splitting apparatus and costs can be reduced.

In another possible implementation of the first aspect, the first prism and the second prism are attached together through the beam splitting surface to form the beam splitting apparatus. The integrally formed beam splitting apparatus has a small size and high stability, which can improve the reliability of the beam splitting apparatus, so that better application effect can be achieved even in an environment with vibrations and significant temperature fluctuations (for example, an in-vehicle environment or a flight environment).

In another possible implementation of the first aspect, the beam splitting surface is configured to split a first light beam entering from the incident surface into a second light beam and a third light beam. The second light beam is a reflected light beam, and the third light beam is a transmitted light beam. The first reflective surface is configured to reflect the second light beam to the first exit surface, and the second reflective surface is configured to reflect the third light beam to the second exit surface. A receiving surface of the second light beam exiting through the first exit surface is coplanar with a receiving surface of the third light beam exiting through the second exit surface. In addition, an optical path length of the second light beam exiting through the first exit surface is the same as an optical path length of the third light beam exiting through the second exit surface.

Further, a transmission path of the second light beam and a transmission path of the third light beam are axially symmetric with respect to the beam splitting surface.

The foregoing implementation provides an optical path design. The first light beam enters from the incident surface, the second light beam obtained through splitting by the beam splitting surface propagates to the first reflective surface, and the third light beam propagates to the second reflective surface. After the first reflective surface and the second reflective surface respectively reflect the second light beam and the third light beam, the second light beam and the third light beam exiting through the exit surface have same optical path lengths and have receiving surfaces that are coplanar.

Optionally, the first light beam is a light beam from object space, and the second light beam and the third light beam are used to obtain a detection result of the object space. Because the second light beam and the third light beam are obtained by splitting a same light beam, and imaging surfaces of the second light beam and the third light beam can be consistent, detection results obtained based on the second light beam and the third light beam can be highly matched. When the detection results need to be fused, fusion effect can be improved, thereby improving detection performance.

In another possible implementation of the first aspect, a principal optical axis of the first light beam is perpendicular to the incident surface. The light beam is incident perpendicularly on the incident surface, which can reduce beam loss, avoid stray light, and improve effectiveness of a received signal.

In another possible implementation of the first aspect, the incident surface is coplanar with the first reflective surface, or the incident surface is parallel to the first reflective surface. In the foregoing structural design, the two light beams obtained through beam splitting are imaged on a same receiving surface. However, the incident surface is coplanar with or parallel to the first reflective surface, which simplifies an overall structure of the beam splitting apparatus and facilitates processing and molding.

In some solutions, the first angle α and the second angle β satisfy: 90° + α = 2β. In this case, the first angle α is 30°, and the second angle β is 60°.

In another possible implementation of the first aspect, a minimum incident angle of the light beam reflected by the beam splitting surface on the first reflective surface is greater than or equal to a total reflection angle of the first reflective surface. In the foregoing implementation, the light beam satisfies a total reflection condition on the first reflective surface, so that the first reflective surface does not need to be coated with a reflective film, thereby simplifying a manufacturing process of the beam splitting apparatus. In some solutions, the first reflective surface does not need to be coated with a film, so that a light beam that generates a reflection phenomenon on the first reflective surface and a light beam incident through the incident surface may overlap. This makes the structure of the beam splitting apparatus more compact and facilitates miniaturization development of the device.

In another possible implementation of the first aspect, a minimum incident angle of the light beam transmitted by the beam splitting surface on the second reflective surface is greater than or equal to a total reflection angle of the second reflective surface. In the foregoing implementation, the light beam satisfies a total reflection condition on the second reflective surface, so that the second reflective surface does not need to be coated with a reflective film, thereby simplifying the manufacturing process of the beam splitting apparatus.

In another possible implementation of the first aspect, the first reflective surface is coated with the reflective film. Through reflection by coating, reflection of the light beam does not need to satisfy the total reflection angle condition, so that a requirement for a field of view of a light beam incident on the beam splitting apparatus is lower, and a larger field of view can be supported. In addition, a light beam reaches the beam splitting apparatus after passing through an imaging lens. When reflection by coating is used on the first reflective surface, an F-number of the imaging lens can be larger, thereby reducing a design requirement for the detection apparatus and increasing application scenarios of the beam splitting apparatus.

In another possible implementation of the first aspect, the second reflective surface is coated with a reflective film. In this way, the requirement for the field of view of the light beam incident on the beam splitting apparatus is lower, and a larger F-number and a larger field of view angle can be supported.

In another possible implementation of the first aspect, the first surface is provided with a beam splitting film, and/or, the second surface is provided with a beam splitting film. Optionally, the beam splitting film is coated on the surface through evaporation.

In another possible implementation of the first aspect, the beam splitting film includes one or more of a wavelength beam splitting film, an intensity beam splitting film (or an energy beam splitting film), a polarization beam splitting film, and the like.

In another possible implementation of the first aspect, a wavelength of the light beam reflected by the beam splitting surface is different from a wavelength of the light beam transmitted by the beam splitting surface. Further, an optical path length of the light beam reflected by the beam splitting surface within the beam splitting apparatus is the same as an optical path length of the light beam transmitted by the beam splitting surface within the beam splitting apparatus. Same optical path lengths help achieve consistent imaging surfaces of the reflected light beam and the transmitted light beam. Particularly for a detection apparatus, consistent imaging surfaces facilitate registration of detection results obtained based on the reflected light beam and the transmitted light beam, thereby improving resolution of the detection apparatus.

For example, in some solutions, the beam splitting surface has different reflectance and transmittance for light of different wavelengths. For example, the transmittance is low in a wavelength range in which a wavelength is less than 750 nanometers (nm), and the transmittance is high in a wavelength range in which a wavelength is greater than 800 nm. To be specific, most of an optical signal with a wavelength less than 750 nm is reflected when passing through the beam splitting surface, and most of an optical signal with a wavelength greater than 800 nm is transmitted when passing through the beam splitting surface.

In another possible implementation of the first aspect, a longer wavelength indicates a shorter corresponding optical path length for a same distance. In some solutions, through an optical path design and/or a prism material design, the reflected light and the transmitted light travel different distances or take different times in the prism. For example, a distance traveled by a long wave is designed to be longer, so that the two light beams are imaged on a same surface.

For ease of description, in the following example, the beam splitting surface is configured to reflect a light beam of a first wavelength and transmit a light beam of a second wavelength. An intersection point between the beam splitting surface and a principal optical axis (or a principal light ray) of a light beam incident on the beam splitting surface is a beam splitting center.

In another possible implementation of the first aspect, a magnitude relationship between a first distance and a second distance is the same as a magnitude relationship between the first wavelength and the second wavelength. The first distance is a distance from the beam splitting center to the first exit surface, and the second distance is a distance from the beam splitting center to the second exit surface. In this implementation, if the first wavelength is greater than the second wavelength, the distance between the beam splitting center and the first exit surface is greater than the distance between the beam splitting center and the second exit surface. The first exit surface has a portion that "extends" beyond the second exit surface, so that the long wave needs to travel a longer distance within the beam splitting apparatus, which helps to achieve same optical path lengths for the reflected light beam and the transmitted light beam. On the contrary, if the first wavelength is less than the second wavelength, the distance between the beam splitting center and the first exit surface is less than the distance between the beam splitting center and the second exit surface. The second exit surface has a portion that "extends" beyond the first exit surface.

In another possible implementation of the first aspect, a magnitude relationship between a third distance and a fourth distance is the same as the magnitude relationship between the first wavelength and the second wavelength. The third distance is a distance from the beam splitting center to the first reflective surface, and the fourth distance is a distance from the beam splitting center to the second reflective surface. In this implementation, if the first wavelength is greater than the second wavelength, the distance between the beam splitting center and the first reflective surface is greater than the distance between the beam splitting center and the second reflective surface. The first reflective surface protrudes further outward relative to the second reflective surface, so that the long wave needs to travel a longer distance within the beam splitting apparatus, which helps to achieve same optical path lengths for the reflected light beam and the transmitted light beam. On the contrary, if the first wavelength is less than the second wavelength, the distance between the beam splitting center and the first reflective surface is less than the distance between the beam splitting center and the second reflective surface. The second reflective surface protrudes further outward relative to the first reflective surface.

In another possible implementation of the first aspect, a magnitude relationship between a refractive index of the first prism and a refractive index of the second prism is opposite to the magnitude relationship between the first wavelength and the second wavelength. In this implementation, the first prism and the second prism are made of materials having different refractive indices. If the first wavelength is greater than the second wavelength, the refractive index of the first prism is less than the refractive index of the second prism, so that the long wave travels for a shorter time in the first prism, which helps to achieve same optical path lengths for the reflected light beam and the transmitted light beam. On the contrary, if the first wavelength is less than the second wavelength, the refractive index of the first prism is greater than the refractive index of the second prism, so that the long wave travels for a shorter time in the second prism.

According to a second aspect, this application provides a beam combining apparatus, including a first prism and a second prism. The first prism includes a first incident surface, a first surface, a first reflective surface, and an exit surface. The first surface and the first incident surface are perpendicular to each other to form a first right angle, and the first reflective surface and the exit surface are opposite to the first right angle. The second prism includes a second incident surface, a second surface, and a second reflective surface. The second surface and the second incident surface are perpendicular to each other to form a second right angle, and the second reflective surface is opposite to the second right angle. The first surface is attached to the second surface to form a beam combining surface. The beam combining surface is configured to reflect a light beam reflected by the first reflective surface and transmit a light beam reflected by the second reflective surface to obtain a combined light beam. The combined light beam exits from the exit surface.

In this embodiment of this application, both two incident light beams are reflected by the reflective surface once, so that propagation paths of the two light beams entering the beam combining surface are similar or even symmetric. In this way, it is easy to combine the two light beams when emitting surfaces of the two light beams are coplanar, and the two light beams after being combined can have same optical path lengths, thereby meeting requirements for properties of the combined light beam in a plurality of cases.

In a possible implementation of the second aspect, an included angle between the first reflective surface and the first incident surface is a second angle β, and an included angle between the second reflective surface and the second incident surface is a third angle γ. The second angle β and the third angle γ satisfy: β = γ.

In this embodiment of this application, because an angle between the first reflective surface and a beam splitting surface is the same as an angle between the second reflective surface and the beam splitting surface, propagation paths of the two input light beams are similar or even symmetric. When optical paths are similar, an incident angle of a light beam is adjusted in a specific application, so that two light beams after being combined have coincident optical paths and equal optical path lengths.

In a possible implementation of the second aspect, an included angle between the exit surface and the beam combining surface is a first angle α, and the included angle between the first reflective surface and the first incident surface is the second angle β. The first angle α and the second angle β satisfy: $90 ° + α = 2 β .$

In this implementation, due to an angular relationship between the first angle α and the second angle β, the combined light beam can be perpendicular to the exit surface. The light beam exits perpendicularly to the exit surface, which can reduce beam loss, avoid stray light, and improve effectiveness of a received signal. In conclusion, in the foregoing implementation, a combined light beam can be obtained after two incident light beams pass through the beam combining apparatus, and the combined light beam is perpendicular to the exit surface.

In a possible implementation of the second aspect, the first prism and the second prism are attached together through the beam combining surface.

In another possible implementation of the second aspect, the first reflective surface is configured to reflect a first light beam to the beam combining surface, and the first light beam enters the first prism from the first incident surface. The second reflective surface is configured to reflect a second light beam to the beam combining surface, and the second light beam enters the second prism from the second incident surface. An emitting surface of the first light beam incident on the first incident surface is coplanar with (or parallel to) an emitting surface of the second light beam incident on the second incident surface. The beam combining surface is configured to reflect the first light beam passing through the first reflective surface and transmit the second light beam passing through the second reflective surface to obtain the combined light beam. An optical axis of the first light beam coincides with an optical axis of the second light beam after passing through the beam combining surface.

In another possible implementation of the second aspect, the combined light beam is perpendicular to the exit surface.

In another possible implementation of the second aspect, the exit surface is coplanar with the first reflective surface, or the exit surface is parallel to the first reflective surface. The first angle is 30°, and the second angle is 60°.

In another possible implementation of the second aspect, a minimum incident angle of a light beam incident through the first incident surface on the first reflective surface is greater than or equal to a total reflection angle of the first reflective surface.

In another possible implementation of the second aspect, the first reflective surface is coated with a reflective film.

In another possible implementation of the second aspect, a minimum incident angle of a light beam incident through the second incident surface on the second reflective surface is greater than or equal to a total reflection angle of the second reflective surface.

In another possible implementation of the second aspect, the second reflective surface is coated with a reflective film.

In another possible implementation of the second aspect, the first surface and/or the second surface are/is provided with a beam splitting film.

In another possible implementation of the second aspect, the beam splitting film includes one or more of a wavelength beam splitting film, an intensity beam splitting film, and a polarization beam splitting film.

In another possible implementation of the second aspect, a wavelength of the light beam incident through the first incident surface is different from a wavelength of the light beam incident through the second incident surface.

In the foregoing implementation, in this application, two composite light beams with different wavelengths may be combined, to meet detection requirements in a plurality of scenarios.

In another possible implementation of the second aspect, an optical path length of the light beam incident through the first incident surface within the beam combining apparatus is the same as an optical path length of the light beam incident through the second incident surface within the beam combining apparatus.

In another possible implementation of the second aspect, a wavelength of the light beam incident through the first incident surface is a first wavelength, and a wavelength of the light beam incident through the second incident surface is a second wavelength. A magnitude relationship between a first distance and a second distance is the same as a magnitude relationship between the first wavelength and the second wavelength. The first distance is a distance from a beam combining center to the first incident surface, and the second distance is a distance from the beam combining center to the second incident surface. The beam combining center is an intersection point between the beam combining surface and a principal optical axis of a light beam incident on the beam combining surface.

In another possible implementation of the second aspect, the wavelength of the light beam incident through the first incident surface is the first wavelength, and the wavelength of the light beam incident through the second incident surface is the second wavelength. A magnitude relationship between a third distance and a fourth distance is the same as the magnitude relationship between the first wavelength and the second wavelength. The third distance is a distance from the beam combining center to the first reflective surface, and the fourth distance is a distance from the beam combining center to the second reflective surface. The beam combining center is an intersection point between the beam combining surface and an optical axis of the light beam incident on the beam combining surface.

In another possible implementation of the second aspect, the wavelength of the light beam incident through the first incident surface is the first wavelength, and the wavelength of the light beam incident through the second incident surface is the second wavelength. A magnitude relationship between a refractive index of the first prism and a refractive index of the second prism is opposite to the magnitude relationship between the first wavelength and the second wavelength.

According to a third aspect, this application provides a detection apparatus, including a first receiving apparatus, a second receiving apparatus, and the beam splitting apparatus according to any one of the implementations of the first aspect. The beam splitting apparatus is configured to split a first light beam into a second light beam and a third light beam. A receiving surface of the second light beam is coplanar with a receiving surface of the third light beam. The first receiving apparatus is configured to receive the first light beam, and the second receiving apparatus is configured to receive the second light beam. A photosensitive surface of the first receiving apparatus is coplanar with a photosensitive surface of the second receiving apparatus.

Certainly, the two receiving surfaces may not be absolutely coplanar. For example, in some cases, the photosensitive surfaces of the two receiving apparatuses are parallel to each other.

In a possible implementation of the third aspect, the first receiving apparatus and the second receiving apparatus are configured to obtain a detection result. The detection result includes one or more of an image, a point cloud, time of flight (time of flight, TOF) information, and a distance, a position, an angle, reflectance, or a color of a target. In the foregoing implementation, the first light beam and the second light beam are obtained by splitting a same light beam, and the photosensitive surface of the first receiving apparatus is coplanar with or parallel to the photosensitive surface of the second receiving apparatus, so that a detection result obtained by the first receiving apparatus and a detection result obtained by the second receiving apparatus are highly registered, thereby reducing complexity of fusing detection structures and improving resolution of the detection apparatus.

In another possible implementation of the third aspect, the first receiving apparatus and the second receiving apparatus are mounted on a same circuit board. In this way, the two receiving apparatuses share a same circuit board, which facilitates manufacturing, mounting, and adjustment.

In another possible implementation of the third aspect, the first receiving apparatus and the second receiving apparatus are detectors, for example, a single-photon avalanche diode (single-photon avalanche diode, SPAD) array detector.

In another possible implementation of the third aspect, the first receiving apparatus and the second receiving apparatus are image sensors. Optionally, the first receiving apparatus is a visible light sensor, and the second receiving apparatus is a mono sensor. Alternatively, optionally, the second receiving apparatus is a visible light sensor, and the first receiving apparatus is a mono sensor.

In another possible implementation of the third aspect, the first receiving apparatus is a detector, and the second receiving apparatus is an image sensor. Alternatively, the second receiving apparatus is a detector, and the first receiving apparatus is an image sensor.

In another possible implementation of the third aspect, the detection apparatus further includes an imaging lens. A first light beam from object space enters the beam splitting apparatus after passing through the imaging lens.

In a possible implementation of the third aspect, the detection apparatus further includes a filtering module. The filtering module is disposed between the imaging lens and the first receiving apparatus, or is disposed between the imaging lens and the second receiving apparatus. After the filtering module performs filtering, effectiveness of an optical signal received by the receiving apparatus is improved, which helps improve detection precision of the detection apparatus.

According to a fourth aspect, this application provides a detection apparatus. The detection apparatus includes a first emitting apparatus, a second emitting apparatus, and the beam combining apparatus according to any one of the implementations of the second aspect. The first emitting apparatus is configured to emit a first light beam, and the second emitting apparatus is configured to emit a second light beam. An emitting surface of the first light beam is coplanar with an emitting surface of the second light beam. The beam combining apparatus is configured to combine the first light beam and the second light beam to obtain a combined light beam. The combined light beam is used to detect object space.

Optionally, a light exit surface of the first emitting apparatus is coplanar with a light exit surface of the second emitting apparatus. The light exit surface of the first emitting apparatus is an emitting surface of the first light beam. Similarly, the light exit surface of the second emitting apparatus is an emitting surface of the second light beam. Certainly, the light exit surfaces of the two emitting apparatuses may not be absolutely coplanar. In some solutions, the light exit surfaces of the two receiving apparatuses are parallel to each other.

In a possible implementation of the fourth aspect, a property of the light beam emitted by the first emitting apparatus is different from a property of the light beam emitted by the second emitting apparatus. For example, the two light beams have different wavelengths, different power, and/or different polarization directions. For example, the first light beam emitted by the first emitting apparatus is a light beam of a first wavelength, and the second light beam emitted by the second emitting apparatus is a light beam of a second wavelength.

In another possible implementation of the fourth aspect, the detection apparatus further includes an optical lens, and a combined light beam exits through the optical lens.

According to a fifth aspect, this application provides a lidar, and the beam splitting apparatus according to the first aspect. Optionally, the lidar further includes a laser and a detector. The laser is configured to emit detection light to object space. A light beam incident on the beam splitting apparatus includes an echo of the detection light, and the light beam is used to obtain information about a target in the object space. The detector is configured to receive a light beam passing through the beam splitting apparatus, to obtain information about the target in the object space.

According to a sixth aspect, this application provides a lidar, and the beam splitting apparatus according to the second aspect. Optionally, the lidar further includes a laser and a detector. The laser is configured to emit at least two beams of detection light to object space. The at least two beams of detection light are incident on a beam combining apparatus to obtain a combined light beam. The combined light beam is configured to detect the object space. The detector is configured to receive an echo of the combined light beam to obtain information about a target in the object space.

According to a seventh aspect, this application provides a lidar. The lidar includes a laser and the detection apparatus in the third aspect. The laser is configured to generate an emitting light beam, and the emitting light beam is used to detect object space. The detection apparatus is configured to receive a first light beam, and the first light beam includes an echo of the emitting light beam.

According to an eighth aspect, this application provides a lidar. The lidar includes a detector and the detection apparatus in the third aspect. The detector is configured to receive a return signal from object space, and the return signal includes an echo of a combined light beam emitted by the detection apparatus.

According to a ninth aspect, this application provides a terminal, including the beam splitting apparatus according to any one of the implementations of the first aspect, or the detection apparatus according to any one of the implementations of the second aspect, or the lidar according to any one of the implementations of the third aspect. Optionally, the terminal includes an intelligent terminal or a transportation means such as a vehicle, a robot, an unmanned aerial vehicle, or a ship.

For beneficial effects of some solutions of the second aspect, the third aspect, the fifth aspect, the sixth aspect, the seventh aspect, and the ninth aspect of this application, refer to beneficial effects of the technical solutions of the first aspect. For beneficial effects of some solutions of the fourth aspect, the sixth aspect, and the eighth aspect of this application, refer to beneficial effects of the solutions of the second aspect.

### BRIEF DESCRIPTION OF DRAWINGS

The following briefly describes accompanying drawings used in describing embodiments.
FIG. 1A and FIG. 1B are diagrams of structures of two beam splitting apparatuses;
FIG. 2 is a diagram of a three-dimensional structure of an optical apparatus according to an embodiment of this application;
FIG. 3 is a diagram of a cross-sectional structure of the optical apparatus shown in FIG. 2 taken along a line A-A;
FIG. 4A is a diagram of a possible optical path of the optical apparatus shown in FIG. 3;
FIG. 4B is a diagram of a possible optical path of the optical apparatus shown in FIG. 2;
FIG. 5A is a diagram of a possible optical path of the optical apparatus shown in FIG. 3;
FIG. 5B is a diagram of a possible optical path of the optical apparatus shown in FIG. 2;
FIG. 6 is a diagram of a structure of another optical apparatus according to an embodiment of this application;
FIG. 7 is a diagram of transmittance of a beam splitting surface for light beams of different wavelengths according to this application;
FIG. 8 is a diagram of a three-dimensional structure of another optical apparatus according to an embodiment of this application;
FIG. 9A is a diagram of an optical path and a cross-sectional structure of the optical apparatus shown in FIG. 8 taken along a line B-B;
FIG. 9B is another diagram of an optical path and a cross-sectional structure of the optical apparatus shown in FIG. 8 taken along a line B-B;
FIG. 10A is a diagram of a structure and an optical path of another optical apparatus according to an embodiment of this application;
FIG. 10B is a diagram of a structure and an optical path of another optical apparatus according to an embodiment of this application;
FIG. 11A is a diagram of a structure and an optical path of another optical apparatus according to an embodiment of this application;
FIG. 11B is a diagram of a structure and an optical path of another optical apparatus according to an embodiment of this application;
FIG. 12A is a diagram of a structure and an optical path of another optical apparatus according to an embodiment of this application;
FIG. 12B is a diagram of a structure and an optical path of another optical apparatus according to an embodiment of this application;
FIG. 13A is a diagram of a structure and an optical path of another optical apparatus according to an embodiment of this application;
FIG. 13B is a diagram of a structure and an optical path of another optical apparatus according to an embodiment of this application;
FIG. 14 is a diagram of a structure of another optical apparatus according to an embodiment of this application;
FIG. 15 is a diagram of a three-dimensional structure of another optical apparatus according to an embodiment of this application;
FIG. 16 is a diagram of a cross-sectional structure of the optical apparatus shown in FIG. 15 taken along a line C-C;
FIG. 17 is a diagram of a three-dimensional structure of another optical apparatus according to an embodiment of this application;
FIG. 18A is a diagram of a structure and an optical path of another optical apparatus according to an embodiment of this application;
FIG. 18B is a diagram of a structure and an optical path of another optical apparatus according to an embodiment of this application;
FIG. 19 is a diagram of a structure of a detection apparatus according to an embodiment of this application;
FIG. 20 is a diagram of an optical path in a light beam receiving process according to an embodiment of this application;
FIG. 21 is a diagram of a structure of a detection apparatus according to an embodiment of this application;
FIG. 22 is a diagram of an optical path in a light beam receiving process according to an embodiment of this application;
FIG. 23 is a diagram of an optical path of an emitting module according to an embodiment of this application; and
FIG. 24 is a diagram of a structure of a detection apparatus according to an embodiment of this application.

### DESCRIPTION OF EMBODIMENTS

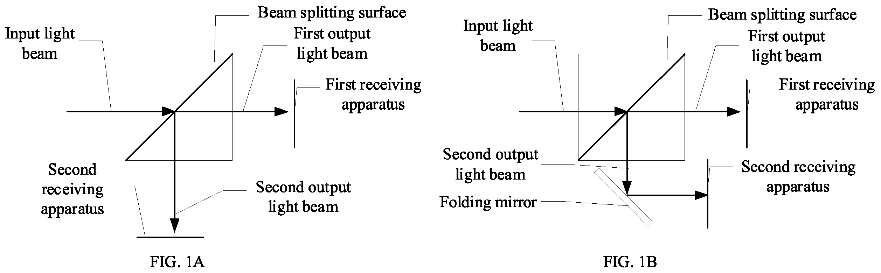

A beam splitting apparatus is an apparatus capable of splitting a light beam into a plurality of light beams. Refer to FIG. 1A and FIG. 1B. A beam splitting apparatus shown in FIG. 1A can split a light beam into a first output light beam in a horizontal direction and a second output light beam in a vertical direction. The first output light beam and the second output light beam are respectively received by a first receiving apparatus and a second receiving apparatus. Because an imaging surface of the first receiving beam and an imaging surface of the second receiving beam are located on different planes, the first receiving apparatus and the second receiving apparatus need to be disposed on different circuit boards. Consequently, it is difficult to mount and adjust a device, and a length and a width of the device also need to be set to be large due to impact of the two receiving apparatuses, leading to a large overall size.

In some solutions, a folding mirror is mounted on the device, so that one of the output light beams can be folded by the folding mirror to obtain two parallel light beams. As shown in FIG. 1B, the folding mirror may fold the second output light beam into a parallel light beam. However, because a receiving surface of the first output light beam is different from a receiving surface of the second output light beam, it is difficult for the first receiving apparatus to couple to the second receiving apparatus, and it is difficult for imaging effect of the second output light beam to match imaging effect of the first receiving light beam.

A beam combining apparatus is an apparatus capable of combining a plurality of light beams into one light beam. Currently, in some scenarios in which two light beams need to be combined, it is difficult to combine two input light beams when emitting surfaces of the two input light beams are coplanar.

In view of this, this application provides a beam splitting apparatus, a beam combining apparatus, a detection apparatus, a lidar, and a terminal. A structure of the beam splitting apparatus is designed, so that paths through which two split light beams pass are similar. This makes it easy to achieve equal optical path lengths of the two light beams obtained through beam splitting, so that receiving surfaces of the two light beams are coplanar. In addition, in this application, there is no need to mount an additional optical element, which facilitates miniaturization development of the device. When this application is applied to a light beam receiving scenario, imaging surfaces of two output light beams can be located on a same plane, so that two receiving apparatuses corresponding to the two output light beams can be integrated into one module, thereby greatly reducing mounting and adjustment difficulty.

The structure in this application may also be used in a beam combining scenario. In this case, paths through which two light beams before beam combining pass are similar, or even symmetric. In this way, it is easy to combine the two light beams when emitting surfaces of the two light beams are coplanar, thereby meeting requirements for properties of a combined light beam in a plurality of cases. When the beam combining apparatus is used in a light beam emitting scenario, two light beams that are emitted by two emitting modules and that have coplanar light exit surfaces can be combined into one output light beam. This enables the two emitting modules to be mounted on a same circuit board, thereby greatly reducing the mounting and adjustment difficulty.

The following describes the beam splitting apparatus and the beam combining apparatus that are provided in this application.

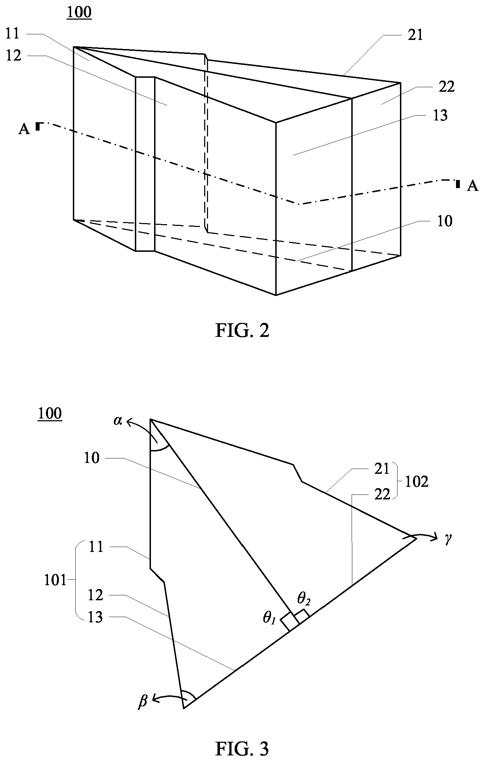

An embodiment of this application provides an optical apparatus. The apparatus may be used as a beam splitting apparatus and/or a beam combining apparatus. With reference to FIG. 2 and FIG. 3, an optical apparatus 100 includes a functional surface 10, a third surface 11, a first reflective surface 12, a fourth surface 13, a second reflective surface 21, and a fifth surface 22. The fourth surface 13 and the functional surface 10 are perpendicular to each other, and a formed angle is referred to as a first right angle (represented as *θ*₁ in FIG. 3). The third surface 11 and the first reflective surface 12 are opposite to the first right angle *θ*₁. The fifth surface 22 and the functional surface 10 are also perpendicular to each other, an angle formed by the fifth surface 22 and the functional surface 10 is referred to as a second right angle (represented as *θ*₂ in FIG. 3). The second reflective surface 21 is opposite to the second right angle *θ*₂. The functional surface 10 is configured to perform beam splitting and/or beam combining.

In an illustration of a beam splitting scenario, a light beam incident on the functional surface 10 from the third surface 11 is split by the functional surface 10 into two light beams. In other words, the functional surface 10 reflects and transmits the light beam incident from the third surface 11, to obtain a reflected light beam and a transmitted light beam. In this case, the optical apparatus 100 may be referred to as a beam splitting apparatus, the functional surface 10 may be referred to as a beam splitting surface, and the third surface 11 may be referred to as an incident surface. Further, the first reflective surface 12 is configured to reflect a light beam reflected by the functional surface 10, and the light beam exits from the fourth surface 13. The second reflective surface 21 is configured to reflect a light beam transmitted by the functional surface 10, and the light beam exits from the fifth surface 22. In this way, in the optical apparatus 100, both the light beam reflected by the functional surface 10 and the light beam transmitted by the functional surface 10 are reflected by the reflective surface once, so that propagation paths of the two light beams obtained through splitting by the functional surface 10 are similar or even the same. On this basis, angular relationships between the surfaces in the optical apparatus 100 are designed, so that the two light beams obtained through beam splitting have equal optical path lengths and have receiving surfaces that are coplanar.

In a diagram of a beam combining scenario, a light beam incident on the functional surface 10 from the first reflective surface 12 is reflected by the functional surface 10, and a light beam incident on the functional surface 10 from the second reflective surface 21 is transmitted by the functional surface 10. In this way, the light beam from the first reflective surface 12 and the light beam from the second reflective surface 21 can be combined into one light beam (referred to as a combined light beam), and the combined light beam may exit from the third surface 11. In this case, the optical apparatus 100 may be referred to as a beam combining apparatus, and the functional surface 10 may be referred to as a beam combining surface. In this way, in the optical apparatus 100, the two incident light beams are reflected by the reflective surface once, so that propagation paths of the two light beams entering the beam combining surface are similar or even symmetric. On this basis, the angular relationships between the surfaces and a relationship of incident angles are designed, so that principal optical axes of the two light beams can coincide after being combined, thereby meeting the requirements for the properties of the combined light beam in a plurality of cases.

Further, with reference to FIG. 2, the fourth surface 13 and the fifth surface 22 are two side surfaces of the optical apparatus 100. The functional surface 10 is located inside the optical apparatus 100, or a part of the functional surface 10 is located inside the optical apparatus 100. The first reflective surface 12 and the second reflective surface 21 are also side surfaces of the optical apparatus 100. With reference to FIG. 3, the first reflective surface 12 and the second reflective surface 21 are respectively opposite to the first right angle *θ*₁ and the second right angle *θ*₂, and the first reflective surface 12 and the second reflective surface 21 are respectively located on two sides of the functional surface 10. Further, one side edge of the third surface 11 is connected to an edge of the first reflective surface 12, and another side edge of the third surface 11 is connected to the functional surface 10. Another side edge of the first reflective surface 12 is connected to the fourth surface 13. Similarly, one side edge of the second reflective surface 21 is connected to the fifth surface 22.

Optionally, both the fourth surface 13 and the fifth surface 22 are perpendicular to the functional surface 10. In other words, the fourth surface 13 is parallel to or coplanar with the fifth surface 22. In some solutions, an included angle between the fourth surface 13 and the functional surface 10 is the same as an included angle between the fifth surface 22 and the functional surface 10.

In a possible implementation, an included angle between the first reflective surface 12 and the fourth surface 13 is a second angle (represented as β in FIG. 3), and an included angle between the second reflective surface 21 and the fifth surface 22 is a third angle (represented as γ in FIG. 3). The second angle β and the third angle γ satisfy: β = γ.

It can be learned from FIG. 3 that when β = γ, because both the fourth surface 13 and the fifth surface 22 are perpendicular to the functional surface 10, an included angle between the first reflective surface 12 and the functional surface 10 is equal to an included angle between the second reflective surface 21 and the functional surface 10. In a scenario in which the functional surface 10 is configured to perform beam splitting, because an angle between the functional surface 10 and the light beam reflected by the functional surface 10 is the same as an angle between the functional surface 10 and the light beam transmitted by the functional surface 10, the included angle between the first reflective surface 12 and the functional surface 10 is designed to be the same as the included angle between the second reflective surface 21 and the functional surface 10, to implement that the propagation paths of the reflected light beam and the transmitted light beam are similar. When optical paths are similar, an incident angle of a light beam incident on the functional surface is adjusted, so that two light beams obtained through beam splitting have equal optical path lengths and have receiving surfaces that are coplanar. Similarly, in a scenario in which the functional surface is configured to perform beam combining, the included angle between the first reflective surface 12 and the functional surface 10 is the same as the included angle between the second reflective surface 21 and the functional surface 10. In this way, after being respectively reflected by the first reflective surface 12 and the second reflective surface 21, the two light beams having coplanar emitting surfaces can be combined into one light beam after passing through the functional surface 10.

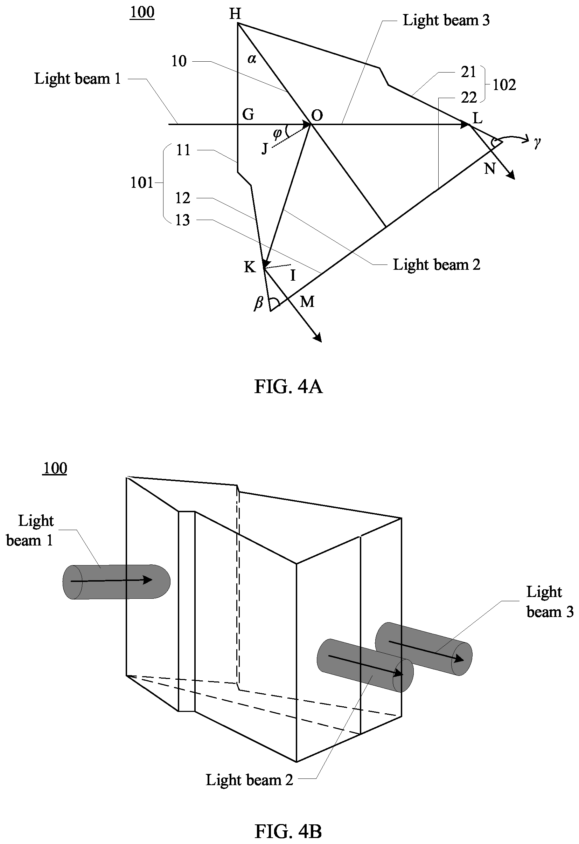

The following describes a diagram of an optical path of the optical apparatus 100 in a beam splitting scenario with reference to FIG. 4A.

FIG. 4A is a diagram of a possible optical path of the optical apparatus shown in FIG. 3. A light beam 1 is incident on the optical apparatus 100 through the third surface 11 and then propagates to the functional surface 10. An intersection point between a principal optical axis of the light beam 1 and the third surface 11 is represented as a point G. An intersection point between the principal optical axis of the light beam 1 and the functional surface 10 is represented as a point O (or referred to as a beam splitting center). The functional surface splits the light beam 1 into a light beam 2 and a light beam 3. The light beam 2 is a reflected light beam, and the light beam 3 is a transmitted light beam. The light beam 2 propagates to the first reflective surface 12, and is reflected by the first reflective surface 12 to the fourth surface 13. An intersection point between a principal optical axis of the light beam 2 and the first reflective surface 12 is a point K. An intersection point between the principal optical axis of the light beam 2 and the fourth surface 13 is a point M. The light beam 3 propagates to the second reflective surface 21, and is reflected by the second reflective surface 21 to the fifth surface 22. An intersection point between a principal optical axis of the light beam 3 and the second reflective surface 21 is a point L. An intersection point between the principal optical axis of the light beam 3 and the fifth surface is a point N. For ease of description, a point H, which is coplanar with the points G, K, and M, on the functional surface is defined, and a position of the point H is shown in FIG. 4A. In the optical apparatus 100 described in FIG. 4A, the third surface 11 may be configured to introduce the light beam 1 into the optical apparatus 100. In other words. The third surface 11 may be used as an incident surface. The light beam 2 and the light beam 3 obtained through beam splitting respectively exit from the fourth surface 13 and the fifth surface 22. In this case, the fourth surface 13 and the fifth surface 22 may be used as exit surfaces.

In a possible example, JO is a normal of the functional surface 10, and an incident angle of the light beam 1 on the functional surface 10 is ∠GOJ, for example, represented as φ in FIG. 4A. KI is a normal of the first reflective surface 12, and an incident angle of the light beam 2 on the first reflective surface is LOKI. With reference to FIG. 4A, an angle of ∠OKM is 2β, and an angle of ∠HOK is 90° + φ. When 90° + φ = 2β is satisfied, the light beam 2 exiting from the fourth surface 13 is parallel to the functional surface 10. Similarly, because an optical path of the light beam reflected by the functional surface 10 is similar to an optical path of the light beam transmitted by the functional surface 10, when β = γ, the light beam 3 exiting from the fifth surface 22 is also parallel to the functional surface 10, and thus parallel to the light beam 2 exiting from the fourth surface 13.

In other words, in the optical apparatus 100, the included angle between the first reflective surface 12 and the functional surface 10 is equal to the included angle between the second reflective surface 21 and the functional surface 10. In this way, if the incident angle φ of the light beam 1 on the functional surface 10 satisfies 90° + φ = 2β, the optical path of the reflected light beam can be similar to the optical path of the transmitted light beam. In addition, after being respectively reflected by the first reflective surface 12 and the second reflective surface 21, the reflected light beam and the transmitted light beam have same optical path lengths and have imaging surfaces that are coplanar. With reference to FIG. 4A and FIG. 4B, in the optical apparatus 100, transmission paths of the light beam 2 and the light beam 3 obtained through beam splitting can be similar (or even symmetric) with respect to the functional surface 10. According to the beam splitting manner in this embodiment of this application, sub-beams obtained through beam splitting can have equal optical path lengths and have receiving surfaces that are coplanar, without a need to mount an additional component, thereby simplifying a structure of the optical apparatus. When the optical apparatus is used in an optical receiving system, two receiving apparatuses corresponding to two output light beams can be integrated into one module, for example, mounted on a same circuit board, so that difficulty of a manufacturing process can be reduced, complexity of mounting and adjustment can be greatly reduced, and time costs can be saved.

It should be understood that the "parallel", "similar", and "symmetric" described above are relative. In a specific implementation, being absolutely "parallel", "similar", or "symmetric" may be impossible due to impact of a manufacturing tolerance and a process level. In addition, the angular relationships in this application may be varied. For example, 90° + α = 2β may also be varied as $45 ° + \frac{α}{2} = β$, 2β - α = 90°, or the like. These varied angular relationships also fall within the protection scope of this application.

In another possible example, the light beam 1 is incident perpendicularly on the third surface 11. An included angle (represented as α in FIG. 3) between the third surface 11 and the functional surface 10 is a first angle. With reference to FIG. 4A, an angle of ∠OKM is 2β, and an angle of ∠HOK is (90° + φ). Because the light beam 1 is perpendicular to the third surface, φ = α. Therefore, when 90° + α = 2β is satisfied, for the light beam 1 incident perpendicularly on the third surface 11, the light beam 2 exiting from the fourth surface 13 is parallel to the functional surface 10. Because the light beam reflected by the functional surface 10 and the light beam transmitted by the functional surface 10 are similar, when β = γ, the light beam 3 exiting from the fifth surface 22 is also parallel to the functional surface 10, and thus parallel to the light beam 2 exiting from the fourth surface 13.

In a possible implementation, the first angle α and the second angle β satisfy: $90 ° + α = 2 β .$

In this implementation, due to an angular relationship between the first angle α and the second angle β, after the light beam perpendicular to the third surface propagates to the functional surface, the functional surface splits light beam into the reflected light beam and the transmitted light beam. Because the reflected light beam and the transmitted light beam are separated along the functional surface in a similar (or even symmetric) manner, and because the second angle β is equal to the third angle γ as described above, paths of the reflected light beam and the transmitted light beam after beam splitting are similar. This makes it easy to achieve equal optical path lengths for the two light beams obtained through beam splitting, thereby making the receiving surfaces of the two light beams coplanar.

In the foregoing example, the light beam is incident perpendicularly on the third surface 11, which can reduce beam loss, avoid stray light, and improve effectiveness of a received signal. For example, when a part of the light beam 1 is reflected by the third surface 11, stray light may propagate away from the optical apparatus 100 in a direction opposite to a propagation direction of the light beam 1, which reduces a possibility that the stray light is reflected by a surrounding component into a receiving optical path.

In some implementations described above, when the light beam 1 is not perpendicularly incident on the third surface 11, the two output light beams may also have equal optical path lengths and have receiving surfaces that are coplanar. For example, when the second angle β and the incident angle φ of the light beam on the functional surface satisfy 90° + φ = 2β, α and β do not need to satisfy 90° + α = 2β. Certainly, these implementations are also applicable to a case in which α and β satisfy 90° + α = 2β.

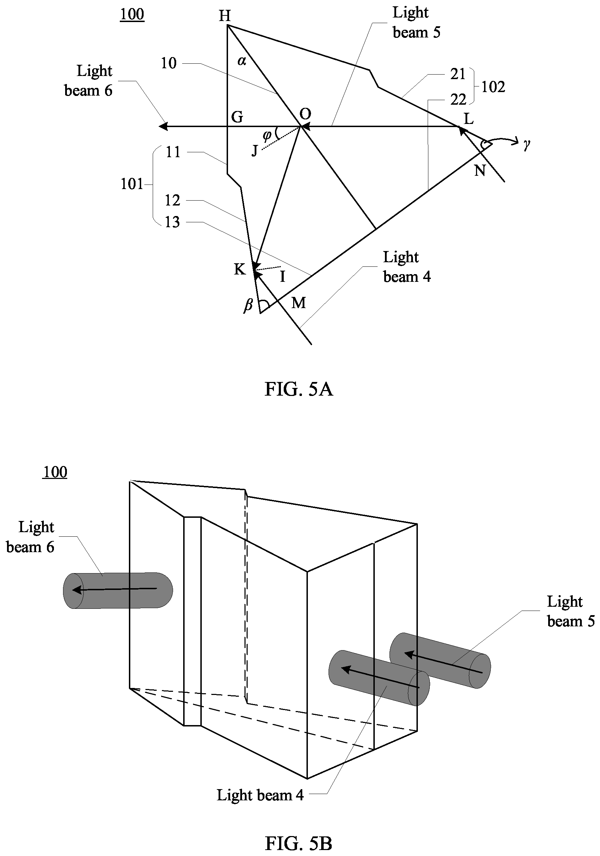

The following describes a diagram of an optical path of the optical apparatus 100 in a beam combining scenario with reference to FIG. 5A.

FIG. 5A is a diagram of another possible optical path of the optical apparatus shown in FIG. 3. A light beam 4 and a light beam 5 are respectively incident from the fourth surface 13 and the fifth surface 22. The light beam 4 is reflected by the first reflective surface 12 to the functional surface 10, and the light beam 5 is reflected by the second reflective surface 21 to the functional surface 10. The functional surface 10 may be configured to reflect the light beam 4 and transmit the light beam 5. After passing through the functional surface 10, the light beam 4 and the light beam 5 are combined to obtain a light beam 6 (namely, a combined light beam). With reference to FIG. 5A and FIG. 5B, the optical apparatus 100 may combine the light beam 4 and the light beam 5 that are incident on the optical apparatus 100. The combined light beam exits from the third surface 11. In this case, the fourth surface 13 and the fifth surface 22 may be configured to introduce the light beam into the optical apparatus 100. In other words, the fourth surface 13 and the fifth surface 22 may be referred to as incident surfaces, and the third surface 11 may be referred to as an exit surface.

In FIG. 5A, an intersection point between a principal optical axis of the light beam 6 and the functional surface 10 is represented as a point O (or referred to as a beam combining center). The light beam 6 may be considered as a reverse light beam of the light beam 1, and the light beam 4 and the light beam 5 may be respectively considered as a reverse light beam of the light beam 1 and a reverse light beam of the light beam 2. Therefore, for some points and angular relationships shown in FIG. 5A, refer to the foregoing description in FIG. 4A.

In a possible example, JO is the normal of the functional surface 10, and an incident angle of the light beam 4 on the functional surface 10 is ∠JOK, for example, represented as φ' in FIG. 5A. An incident angle of the light beam 4 on the first reflective surface is LIKM. With reference to FIG. 5A, an angle of ∠OKM is 2β, and an angle of ∠HOK is 90° + φ'. When 90° + φ' = 2β is satisfied, for the light beam 4 incident perpendicularly on the fourth surface 13 and the light beam 5 incident perpendicularly on the fifth surface 22, optical axes of the two light beams are parallel or even coincident after passing through the functional surface 10. In a case of coincidence, the light beam 4 and the light beam 5 are combined into one light beam, namely, the light beam 6 shown in FIG. 5A.

In another possible example, the combined light beam exits perpendicularly to the third surface 11. With reference to the related description in FIG. 4A, in this case, the first angle α and the second angle β satisfy: $90 ° + α = 2 β .$

In the foregoing example, the combined light beam exits perpendicularly to the third surface 11, which can reduce the beam loss, avoid the stray light, and improve the effectiveness of the received signal.

The foregoing describes diagrams of two optical paths for beam splitting and beam combination. The following describes an optical system in which the optical apparatus 100 can be used.

In a possible implementation, the optical apparatus 100 is used in an optical receiving system. The beam splitting scenario is used as an example. With reference to FIG. 4A and FIG. 4B, the light beam 1 may include a light beam from object space, and the light beam 2 and the light beam 3 are used to obtain a detection result of the object space. Because the light beam 2 and the light beam 3 are obtained by splitting a same light beam, and imaging surfaces of the light beam 2 and the light beam 3 can be consistent, detection results obtained based on the light beam 2 and the light beam 3 can be highly matched. When the detection results need to be fused, fusion effect can be improved, thereby improving detection performance.

In another possible implementation, the optical apparatus 100 may be used in an optical emitting system. A beam combining scenario in the optical emitting system is used as an example. With reference to FIG. 5A and FIG. 5B, the light beam 4 may be a light beam emitted by an optical emitting apparatus, and the light beam 5 may be a light beam emitted by another optical emitting apparatus. After being combined by the optical apparatus 100, the light beam 4 and the light beam 5 may be combined to obtain a combined light beam to detect the object space. In some solutions, the light beam 4 and the light beam 5 have different optical properties, such as different energy intensities or energy distributions, different wavelengths, or different polarization modes, so that the combined light beam is a composite light beam. When the composite light beam is used to detect the object space, detection efficiency and detection precision can be improved.

A beam splitting scenario in the optical emitting system is used as an example. With reference to FIG. 4A and FIG. 4B, the light beam 1 may be a light beam emitted by the optical emitting apparatus. After passing through the optical apparatus 100, the light beam may be split into two light beams to illuminate the object space, thereby increasing a quantity of emission lines of the emitted light beam and improving detection efficiency.

The following continues to describe some possible designs of the optical apparatus 100.

In some possible implementations, the optical apparatus 100 may be used in a transmit-receive coaxial system. For example, the optical apparatus 100 may perform a beam combining operation in an emitting process, and perform a beam splitting operation in a receiving process.

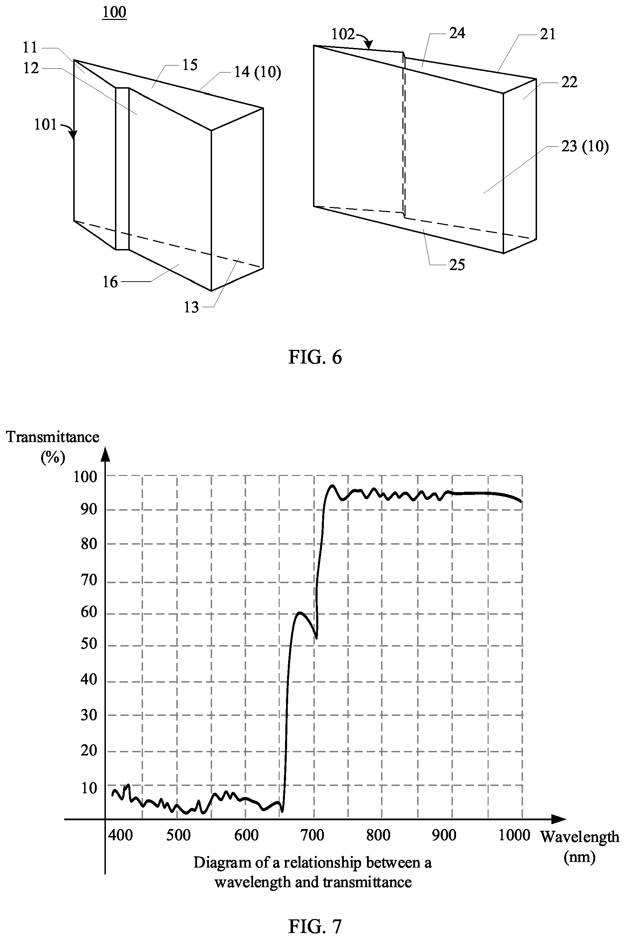

In a possible implementation, with reference to FIG. 2, the optical apparatus 100 is a prism. The prism is used to implement beam splitting and reflection, so that the surfaces are easily fixed and formed, and the angular relationships between the surfaces are stable, thereby improving manufacturing efficiency and improving reliability of the optical apparatus. With reference to FIG. 6 and FIG. 4A, the optical apparatus 100 includes two beam splitting prisms, namely, a first prism 101 and a second prism 102. The first prism 101 includes the third surface 11, the first surface 14, the first reflective surface 12, and the fourth surface 13. The second prism 102 includes the second surface 23, the second reflective surface 21, and the fifth surface 22. The first surface 14 of the first prism 101 is attached to the second surface 23 of the second prism 102 to form the functional surface 10. Two beam splitting prisms that are separately disposed are attached to form the optical apparatus 100, so that manufacturing difficulty and costs can be reduced.

Optionally, the third surface 11, the first surface 14, the first reflective surface 12, and the fourth surface 13 are side surfaces of the first prism 101. With reference to FIG. 6, the first prism 101 further includes a first upper bottom surface 15 and a first lower bottom surface 16. Similarly, the second surface 23, the second reflective surface 21, and the fifth surface 22 are side surfaces of the second prism 102. The second prism 102 further includes a second upper bottom surface 24 and a second lower bottom surface 25.

In some possible implementations, the first surface 14 is provided with a beam splitting film, and/or, the second surface 23 is provided with a beam splitting film. In some examples, the beam splitting film is coated on the surface through evaporation. Optionally, the beam splitting film includes one or more of a wavelength beam splitting film, an intensity beam splitting film (or an energy beam splitting film), a polarization beam splitting film, and the like.

For example, the functional surface can split a light beam into two parts with equal energy. In other words, the functional surface is a half-transparent and half-reflective functional surface. In some solutions, within a specific wavelength range, for example, a wavelength range from 300 nanometers (nm) to 100 micrometers (µm), the half-transparent and half-reflective functional surface has same transmittance and reflectance for light of each wavelength. It should be understood that the term "same" herein does not necessarily mean exactly the same, for example, a difference between the transmittance and the reflectance is approximately 10%. Usually, a beam splitting manner in which a transmitted light and a reflected light each account for 50% is commonly used. However, this application is also applicable to a beam splitter with another transmittance ratio (reflection ratio), for example, a beam splitting manner with 40% transmittance and 60% reflectance.

For another example, the functional surface uses a wavelength splitting design. For example, the functional surface has different reflectance and transmittance for light of different wavelengths. With reference to FIG. 7, the transmittance of the functional surface 10 is low in a wavelength range in which a wavelength is less than 650 nm, and the transmittance is high in a wavelength range in which a wavelength is greater than 750 nm. To be specific, most of an optical signal with a wavelength less than 650 nm is reflected when passing through the functional surface, and most of an optical signal with a wavelength greater than 750 nm is transmitted when passing through the functional surface. It should be understood that the transmittance curve shown in FIG. 7 is merely an example. In a specific implementation, there may be another design for the transmittance of the functional surface, and there may also be another design for a light beam of a specific wavelength having high transmittance and a light beam of a specific wavelength having high reflectance.

It should be noted that, the beam splitting film may be referred to as a beam combining film in a scenario in which the beam splitting film is configured to perform beam combining, for example, in some beam combining scenarios. Related descriptions are not provided in detail herein.

In some possible implementations, with reference to FIG. 2 and FIG. 6, the first prism 101 and the second prism 102 are attached together through the functional surface 10 to form the optical apparatus 100. The integrally formed optical apparatus has a small size and high stability, which can improve the reliability of the optical apparatus, so that better application effect can be achieved even in an environment with vibrations and significant temperature fluctuations (for example, an in-vehicle environment or a flight environment).

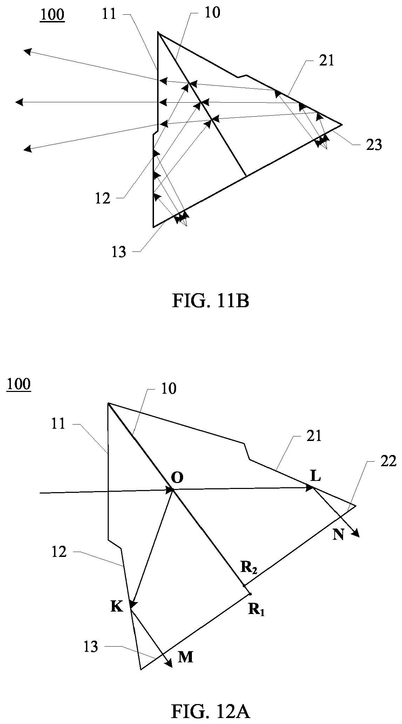

Optionally, surfaces that are of the first prism 101 and the second prism 102 and that are attached to each other may have same shapes, and may further have same sizes. Certainly, this application is also applicable to a case in which the attached surfaces have different shapes and sizes, for example, an implementation shown in FIG. 12A and the like in the following.

In some possible implementations, the first prism 101 and the second prism 102 are spliced to form the optical apparatus 100 by using a prism bonding process. The prism bonding process includes a gluing process, an optical contact process, and the like.

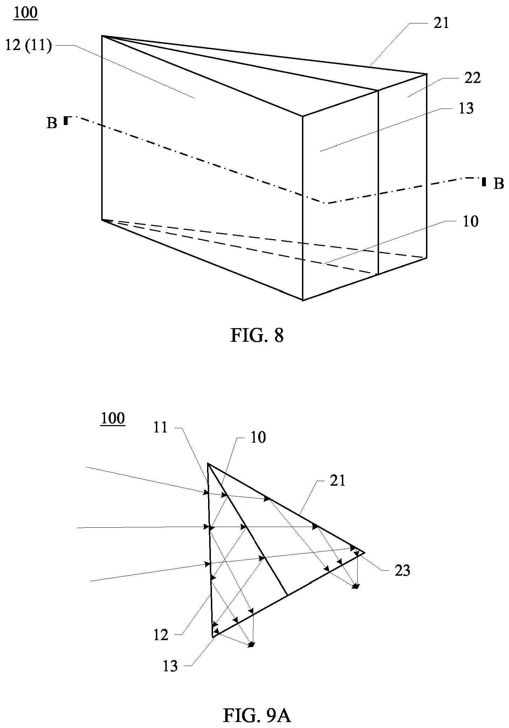

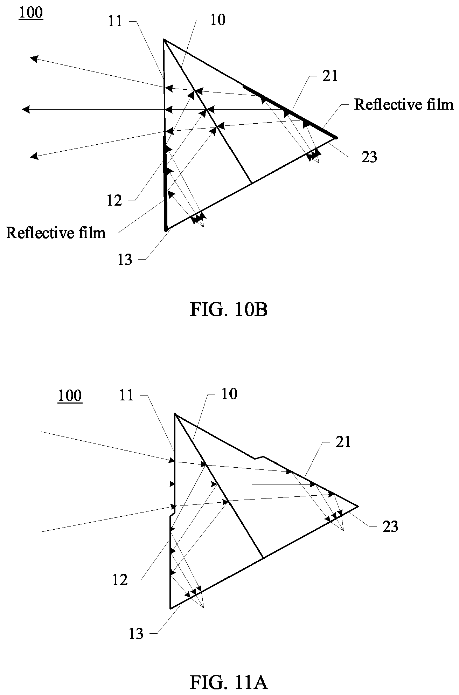

In some possible implementations, the third surface 11 is coplanar with or parallel to the first reflective surface 12. In consideration of some possible cases, the first angle α and the second angle β satisfy: 90° + α = 2β. In this case, the first angle is 30°, and the second angle is 60°. For example, refer to FIG. 8, FIG. 9A, FIG. 9B, FIG. 10A, and FIG. 10B. The third surface 11 is coplanar with the first reflective surface 12. For another example, refer to FIG. 11A and FIG. 11B. The third surface 11 is parallel to the first reflective surface 12.

In some possible implementations, in a beam splitting scenario, a light beam reflected by the functional surface 10 undergoes total reflection on the first reflective surface 12. Refer to FIG. 9A. The first reflective surface 12 reflects the light beam reflected by the functional surface to the fourth surface 13. Total reflection (referred to as total internal reflection) is an optical phenomenon. When a light ray is emitted from an optically denser medium to an optically rarer medium, if an incident angle is greater than a total reflection angle, a refracted light ray totally disappears, and all incident light rays are reflected without entering the optically rarer medium. This phenomenon is referred to as total reflection. For example, on a boundary surface between an optically denser medium and an optically rarer medium, a light ray that is from the optically denser medium and whose incident angle is less than a critical angle for total reflection may be refracted into the optically rarer medium. A light ray that is from the optically denser medium and whose incident angle is greater than or equal to the critical angle for total reflection is totally reflected back into the optically denser medium. The critical angle for total reflection is related to a refractive index of the optically denser medium and a refractive index of the optically rarer medium.

In some solutions, there is a specific included angle between a light ray at an edge of a light beam and a principal optical axis of the light beam. Correspondingly, in a light beam reflected by the functional surface, an incident angle of a light ray in the optical axis on the first reflective surface 12 is different from an incident angle of a light ray at an edge of the light beam on the first reflective surface 12. In a possible implementation, a minimum incident angle of a light beam transmitted by the functional surface on the first reflective surface 12 is greater than or equal to a total reflection angle (or referred to as a critical angle for total reflection) of the first reflective surface 12. The minimum incident angle is the smallest incident angle among incident angles formed at different positions by the light beam transmitted by the functional surface. In this way, the light beam reflected by the functional surface satisfies a total reflection condition (that is, being greater than the total reflection angle) on the first reflective surface, so that the first reflective surface 12 does not need to be coated with a reflective film, thereby simplifying the manufacturing process of the optical apparatus.

Further, with reference to FIG. 9A, a beam splitting scenario is used as an example. When the first reflective surface 12 is not coated with a reflective film, a light beam undergoes reflection on the first reflective surface 12 and a light beam incident through the third surface may overlap, which facilitates miniaturization development of the device.

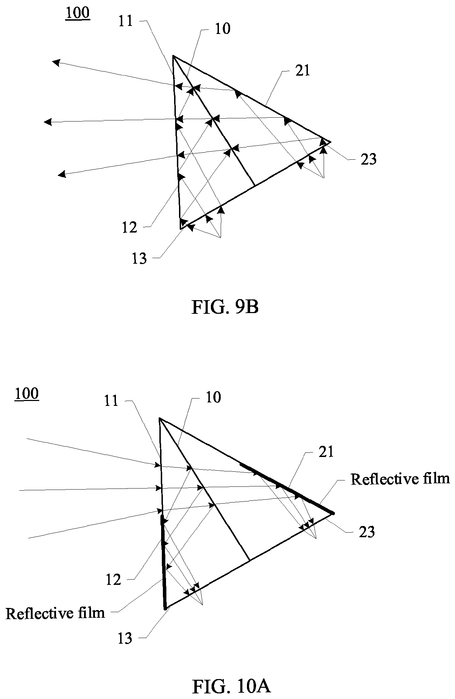

Similarly, with reference to FIG. 9B, in a beam combining scenario, a light beam incident through the fourth surface 13 undergoes total reflection on the first reflective surface 12. Further, for the light beam incident through the fourth surface 13, a minimum incident angle of the light beam on the first reflective surface 12 is greater than or equal to the total reflection angle of the first reflective surface 12.

Optionally, when the first reflective surface 12 is not coated with a reflective film, the light beam undergoes reflection on the first reflective surface 12 and the light beam incident through the third surface may overlap.

In some possible implementations, refer to FIG. 9A. A beam splitting scenario is used as an example. A transmitted light beam transmitted through the functional surface 10 undergoes total reflection on the second reflective surface 21. Similar to the condition for total reflection on the first reflective surface 12 described above, in this case, a minimum incident angle of the light beam transmitted through the functional surface 10 on the second reflective surface 21 is greater than or equal to the total reflection angle of the second reflective surface 21. In this way, the light beam satisfies the total reflection condition on the second reflective surface 21, so that the second reflective surface 21 does not need to be coated with a reflective film, thereby simplifying the manufacturing process of the optical apparatus.

Similarly, with reference to FIG. 9B, in a beam combining scenario, a light beam incident through the fifth surface 22 undergoes total reflection on the second reflective surface 21. Similar to the condition for total reflection on the first reflective surface 12 described above, in this case, a minimum incident angle of the light beam incident through the fifth surface 22 on the second reflective surface 21 is greater than or equal to the total reflection angle of the second reflective surface 21.

Optionally, the total reflection angle of the first reflective surface 12 is different from or the same as the total reflection angle of the second reflective surface 21.

The foregoing describes implementation of reflection on the first reflective surface 12 and the second reflective surface 21 through total reflection. With reference to FIG. 10A and FIG. 10B, the following describes some possible implementations of reflection by coating.

In some possible implementations, the first reflective surface 12 is coated with a reflective film. Optionally, the reflective film is coated on the first reflective surface through evaporation. Through reflection by coating, reflection of the light beam does not need to satisfy the total reflection angle condition, so that a requirement for a field of view of a light beam incident on the optical apparatus is lower, and a larger field of view can be supported.

In some solutions, a light beam reaches the optical apparatus after passing through an imaging lens. When reflection by coating is used on the first reflective surface, an F-number of the imaging lens can be larger, thereby reducing a design requirement for the detection apparatus and increasing application scenarios of the optical apparatus. The F-number, also referred to as an F-value, is a parameter indicating a light-gathering capability of a lens. In some solutions, the F-number is defined as a ratio of an equivalent focal length to an optical aperture, and is denoted as F or f/D.

In some possible implementations, the second reflective surface 21 is coated with a reflective film. In this way, the requirement for the field of view of the light beam incident on the optical apparatus is lower, and a larger F-number and a larger field of view angle can be supported.

It should be noted that the plurality of implementations described above may be combined. For example, the first reflective surface 12 performs reflection through total reflection, and the second reflective surface 21 is coated with a reflective film.

In some possible implementations, a wavelength of the light beam reflected by the functional surface 10 is different from a wavelength of the light beam transmitted by the functional surface 10. An optical path of the light beam reflected by the functional surface within the optical apparatus is the same as an optical path of the light beam transmitted by the functional surface within the optical apparatus. For example, when the optical apparatus 100 is used in an optical receiving system, same optical path lengths can achieve consistent imaging surfaces of the reflected light beam and the transmitted light beam. Particularly for a detection apparatus, consistent imaging surfaces facilitate registration of detection results obtained based on the reflected light beam and the transmitted light beam, thereby improving resolution of the detection apparatus.

For example, in some solutions, the functional surface 10 is provided with a wavelength beam splitting film (or referred to as a wavelength-selective beam splitting film), so that the functional surface 10 have different reflectance and transmittance for light of different wavelengths. When a beam splitting principle of the functional surface 10 is wavelength splitting (or wavelength combining), a longer wavelength indicates a shorter corresponding optical path length for a same distance. In some solutions, through an optical path design or a prism material design, the light beam reflected by the functional surface 10 and the light beam transmitted by the functional surface 10 travel different distances or take different times in the prism. For example, a distance traveled by a long wave is designed to be longer, so that the two light beams have same optical path lengths. The following describes, by using examples, some implementations in which same optical path lengths can be achieved. It should be understood that the following implementations may be combined.

For ease of description, in the following example, the functional surface 10 is configured to reflect a light beam of a first wavelength and a light beam of a second wavelength. It should be understood that the first wavelength and the second wavelength herein are examples for ease of describing characteristics of transmittance and reflectance of the functional surface 10 for a long wave and a short wave, and should be understood in a broad sense in a specific implementation. In some solutions, the first wavelength and the second wavelength may represent wavelength ranges. For example, the first wavelength is a wavelength range in which a wavelength is less than or equal to 700 nm, and the second wavelength is a wavelength range in which a wavelength is greater than 700 nm. In some solutions, the first wavelength is a center wavelength of a wavelength range reflected by the functional surface, or the second wavelength is a center wavelength of a wavelength range transmitted by the functional surface.

For ease of description, in a case of beam splitting, an intersection point between a principal optical axis (or a principal light ray) of a light beam incident on the functional surface 10 and the functional surface 10 is referred to as a beam splitting center. In a case of beam combining, an intersection point between the functional surface 10 and a principal optical axis (or a principal light ray) of a light beam obtained through combining by the functional surface 10 is referred to as a beam combining center. In the foregoing definitions, the beam splitting center and the beam combining center may be replaced with each other. It should be understood that the beam splitting center (or the beam combining center) is an example definition for ease of describing a distance from the functional surface. There may be another definition in a specific implementation. For example, the implementations of this application are also applicable to a case in which the beam splitting center is located at an optical axis center of the optical apparatus 100. Alternatively, the beam splitting center may be any point on the functional surface 10, for example, a midpoint on the functional surface 10 or a midpoint in any direction.

In a possible implementation, refer to FIG. 12A. Beam splitting is used as an example. A distance from the beam splitting center O to the fourth surface 13 is a first distance, for example, represented as OR₁. A distance from the beam splitting center O to the fifth surface 22 is a second distance, for example, represented as OR₂. A magnitude relationship between the first distance OR₁ and the second distance OR₂ is the same as a magnitude relationship between the first wavelength and the second wavelength. It may be understood that, if the first wavelength is greater than the second wavelength, that is, the functional surface reflects a long wave and transmits a short wave, the first distance OR₁ is greater than the second distance OR₂. The fourth surface 13 has a portion that "extends" beyond the fifth surface 22, so that the long wave needs to travel a longer distance within the optical apparatus 100, which helps to achieve same optical path lengths for the reflected light beam and the transmitted light beam. On the contrary, if the first wavelength is less than the second wavelength, the first distance OR₁ is less than the second distance OR₂. The fifth surface 22 has a portion that "extends" beyond the fourth surface 13, so that the long wave needs to travel a longer distance within the optical apparatus 100, which helps to achieve same optical path lengths.

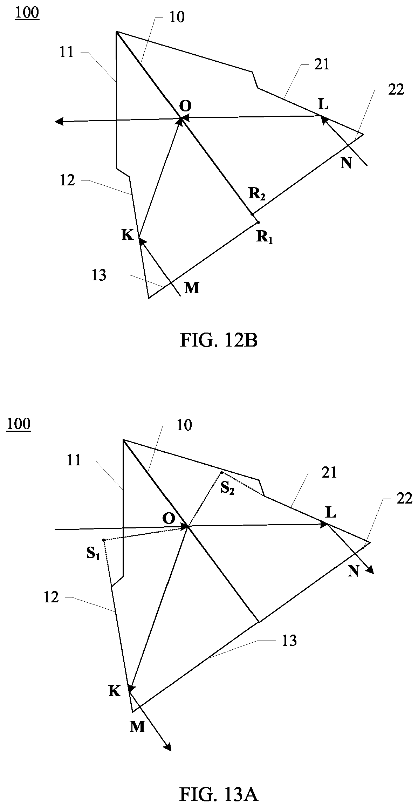

Similarly, refer to FIG. 12B for a case of beam combining. The magnitude relationship between the first distance OR₁ and the second distance OR₂ is the same as the magnitude relationship between the first wavelength and the second wavelength. If the first wavelength is greater than the second wavelength, that is, the functional surface reflects a long wave and transmits a short wave, in a structure shown in FIG. 12B, the long wave needs to travel a longer distance within the optical apparatus 100, which helps to achieve same optical path lengths for the reflected light beam and the transmitted light beam. On the contrary, if the first wavelength is less than the second wavelength, the first distance OR₁ is less than the second distance OR₂. The long wave also travels a longer distance within the optical apparatus 100, thereby achieving same optical path lengths.

In a possible implementation, refer to FIG. 13A. Beam splitting is used as an example. A distance from the beam splitting center O to the first reflective surface 12 is a third distance, for example, represented as OS₁. A distance from the beam splitting center O to the second reflective surface 21 is a fourth distance, for example, represented as OS₂. A magnitude relationship between the third distance OS₁ and the fourth distance OS₂ is the same as the magnitude relationship between the first wavelength and the second wavelength. It may be understood that, if the first wavelength is greater than the second wavelength, that is, the functional surface reflects a long wave and transmits a short wave, the third distance OS₁ is greater than the fourth distance OS₂. The first reflective surface 12 "protrudes" in a direction farther away from the beam splitting center relative to the second reflective surface 21, so that the long wave needs to travel a longer distance within the optical apparatus 100, which helps to achieve same optical path lengths for the reflected light beam and the transmitted light beam. On the contrary, if the first wavelength is less than the second wavelength, the third distance OS₁ is less than the fourth distance OS₂, so that the long wave needs to travel a longer distance within the optical apparatus 100, thereby achieving same optical path lengths.

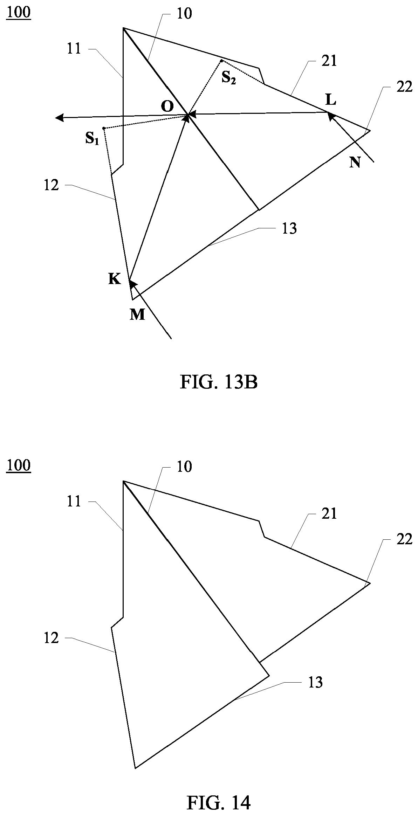

Similarly, in a case of beam combining, with reference to FIG. 13B, the magnitude relationship between the third distance OS₁ and the fourth distance OS₂ is the same as the magnitude relationship between the first wavelength and the second wavelength. If the first wavelength is greater than the second wavelength, that is, the functional surface reflects a long wave and transmits a short wave, in a structure shown in FIG. 13B, the long wave needs to travel a longer distance within the optical apparatus 100, which helps to achieve same optical path lengths for the reflected light beam and the transmitted light beam. On the contrary, if the first wavelength is less than the second wavelength, the third distance OS₁ is less than the fourth distance OS₂. The long wave also travels a longer distance within the optical apparatus 100, thereby achieving same optical path lengths.

In a possible implementation, the optical apparatus 100 includes the first prism 101 and the second prism 102. A refractive index of the first prism 101 is different from a refractive index of the second prism 122. Further, a magnitude relationship between the refractive index of the first prism 101 and the refractive index of the second prism 102 is opposite to the magnitude relationship between the first wavelength and the second wavelength. In this way, the first prism 101 and the second prism 102 are made of materials having different refractive indices. If the first wavelength is greater than the second wavelength, the refractive index of the first prism 101 is less than the refractive index of the second prism 102, so that the long wave travels for a shorter time in the first prism 101, which helps to achieve same optical path lengths for the reflected light beam and the transmitted light beam. On the contrary, if the first wavelength is less than the second wavelength, the refractive index of the first prism 101 is greater than the refractive index of the second prism 102, so that the long wave travels for a shorter time in the second prism 102.

The following provides an example of a combination. Refer to FIG. 14. When the wavelength of the light beam reflected by the functional surface 10 is greater than the wavelength of the light beam transmitted by the functional surface 10, the fourth surface 13 extends beyond the fifth surface 22, and the first reflective surface 12 protrudes more relative to the second reflective surface 21, so that the long wave travels a longer distance within the optical apparatus 100, thereby achieving same optical path lengths for the long wavelength and the short wavelength. Certainly, this application is also applicable to a combination of other implementations. Details are not described herein.

In the foregoing, in some implementations, a case in which structures on left and right sides of the functional surface 10 are basically symmetric is used as an example. In some possible implementations, the structures on the left and right sides of the functional surface 10 may be asymmetric. When the optical apparatus 100 includes the first prism 101 and the second prism 102, a structure of the first prism 101 may be different from a structure of the second prism 102.

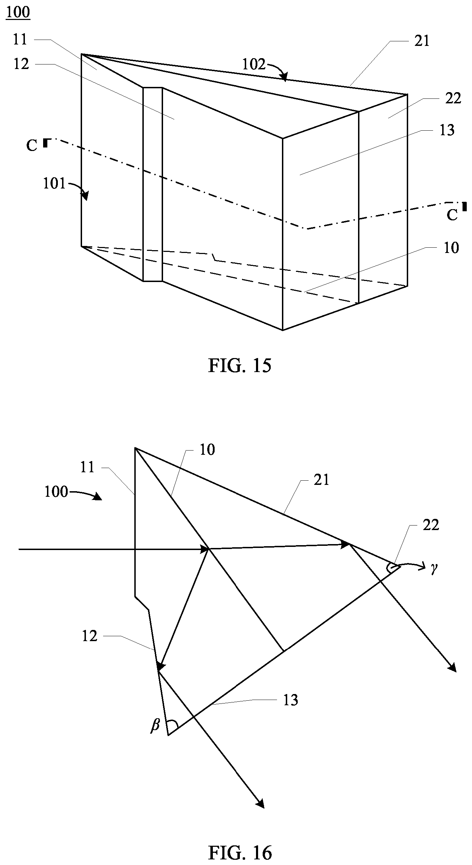

FIG. 15 is a diagram of a three-dimensional structure of another optical apparatus according to an embodiment of this application. The optical apparatus 100 includes the first prism 101 and the second prism 102. The third surface 11 of the first prism 101 and the first reflective surface 12 are opposite to the first right angle (namely, the right angle formed by the functional surface 10 and the fourth surface 13). The third surface 11 is connected to an edge of the first reflective surface 12. The third surface 11 is also connected to an edge of the functional surface 10, and the first reflective surface 12 is connected to an edge of the fourth surface 13. In the second prism, the second reflective surface 21 is separately connected to the functional surface 10 and an edge of the fifth surface 22, and the structure of the first prism 101 and the structure of the second prism 102 are asymmetric.

With reference to FIG. 16, in some cases, when the structure of the optical apparatus is not completely symmetric, the paths of the reflected light beam and the transmitted light beam obtained through splitting by the functional surface 10 may be symmetric. For example, when the second angle β and the third angle γ satisfy: β = γ, and the distance from the first reflective surface 12 to the beam splitting center is the same as the distance from the second reflective surface 21 to the beam splitting center, the optical paths of the reflected light beam and the transmitted light beam are axially symmetric with respect to the functional surface 10.

The optical apparatus provided in embodiments of this application is described in FIG. 2 to FIG. 16 by using a prism as an example. In some solutions, the optical apparatus in this application may also be implemented by disposing a plurality of optical elements.

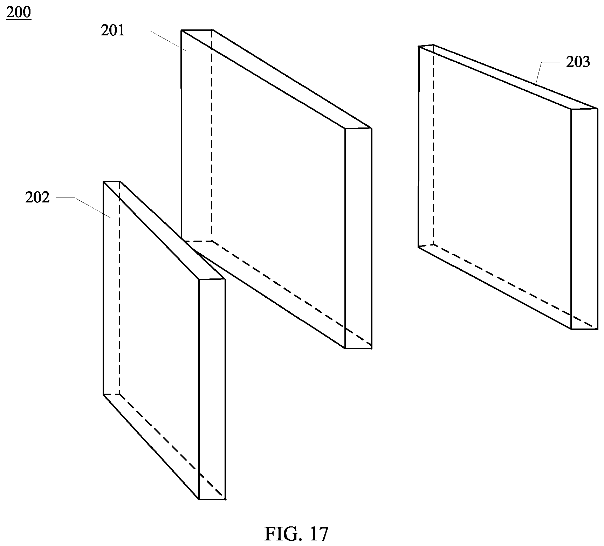

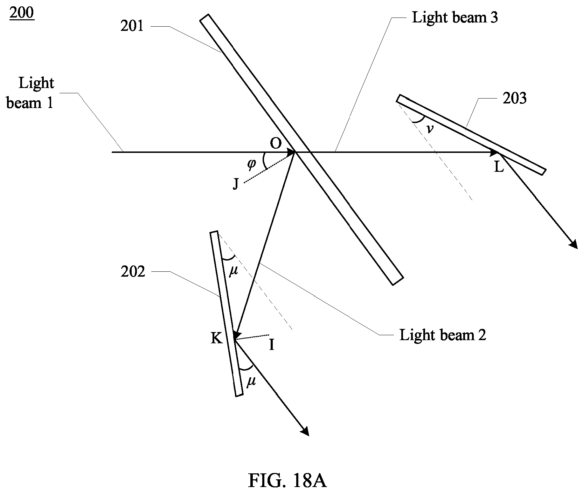

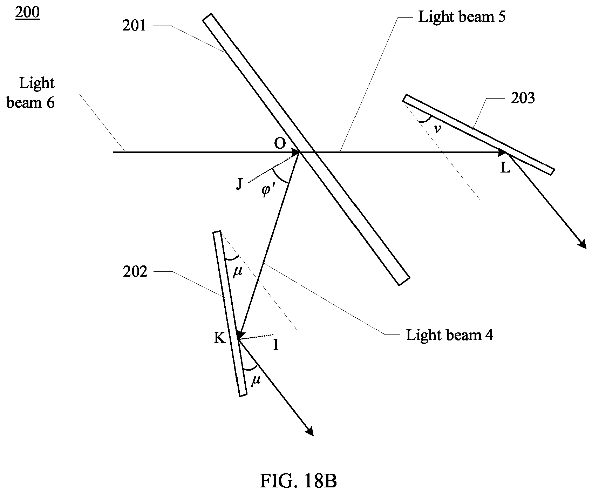

Refer to FIG. 17, FIG. 18A, and FIG. 18B. An optical apparatus 200 includes a beam splitter 201 (or referred to as a beam combining mirror), a first folding mirror 202, and a second folding mirror 203. The beam splitter 201 is configured to perform beam splitting and/or beam combining. With reference to FIG. 18A, in a beam splitting scenario, the beam splitter 201 splits a light beam into a reflected light beam and a transmitted light beam. With reference to FIG. 18B, in a beam combining scenario, the beam splitter 201 reflects a light beam from the first folding mirror 202 and transmits a light beam from the second folding mirror 203, thereby obtaining a combined light beam.

Optionally, the beam splitter 201 is a beam splitting element that performs wavelength splitting, energy splitting, polarization splitting, or the like. For example, the beam splitter 201 may be a half-transparent half-reflective beam splitter, a beam splitter with 40% transmission and 60% reflectance, a dichroic beam splitter, or a polarization beam splitter. The reflected light beam obtained through splitting by the beam splitter 201 is reflected by the first folding mirror 202, and the transmitted light beam is reflected by the second folding mirror 203.

In a possible implementation, an included angle between a reflective surface of the first folding mirror 202 and the functional surface of the beam splitter 201 is a fourth angle, for example, represented as µ. An included angle between a reflective surface of the second folding mirror 203 and the functional surface of the beam splitter 201 is a fifth angle, for example, represented as v. In a beam splitting scenario, the fourth angle µ is the same as the fifth angle v, so that an optical path of the reflected light beam is similar to an optical path of the transmitted light beam. In this way, an incident angle of a light beam incident on the beam splitter 201 is controlled, so that a light beam reflected by the first folding mirror 202 can be parallel to a light beam reflected by the second folding mirror 203, thereby making receiving surfaces of the two light beams parallel.

A possible optical path is considered. With reference to FIG. 18A, the light beam incident on the beam splitter 201 is a light beam 1, and the beam splitter 201 splits the light beam 1 into a light beam 2 and a light beam 3. An incident angle of the light beam 1 is represented as φ. It can be learned that, when the incident angle φ satisfies 2µ + φ = 90°, a path of the light beam 2 can be similar to a path of the light beam 3, the light beam 2 and the light beam 3 are parallel after respectively passing through the first folding mirror 202 and the second folding mirror 203, and an imaging surface of the light beam 2 is parallel to or coplanar with an imaging surface of the light beam 3. Certainly, in some solutions, due to a specific thickness of the beam splitter 201, an optical path length of light beam 2 may be different from an optical path length of the light beam 3. In some further solutions, some components may be additionally disposed on the optical path of the reflected light beam, so that the light beam 2 and the light beam 3 have same optical path lengths, thereby achieving coplanar receiving surfaces.

In a possible implementation, when the beam splitter 201 performs wavelength splitting, for example, the beam splitter 201 reflects light of the first wavelength and transmits light of the second wavelength. In this case, a magnitude relationship between a distance from the first folding mirror 202 to the beam splitting center and a distance from the second folding mirror 203 to the beam splitting center is the same as a magnitude relationship between the light of the first wavelength and the light of the second wavelength. The beam splitting center is an intersection point between an optical axis of the light beam 1 and the surface of the beam splitter 201, namely, the point O shown in FIG. 18A. For related descriptions, refer to the foregoing description.

The foregoing possible design in the beam splitting scenario is also applicable to a beam combining scenario. For example, with reference to FIG. 18B, in the beam combining scenario, the fourth angle µ is the same as the fifth angle v, and light beams passing through the beam splitter 201 are parallel, so that the light beams are combined into one light beam. For example, the light beam 4 and the light beam 5 are respectively incident on the first folding mirror 202 and the second folding mirror 203. The beam splitter 201 is configured to reflect the light beam 4 and transmit the light beam 5. Because the fourth angle µ is the same as the fifth angle v, the light beam 4 and the light beam 5 after passing through the beam splitter 201 are parallel. Positions at which the light beam 4 and the light beam 5 are incident on the first folding mirror 202 and the second folding mirror 203 are designed, so that a principal optical axis of the light beam 4 coincides a principal optical axis of the light beam 5 after passing through the beam splitter 201, thereby combining the light beam 4 and the light beam 5 to obtain a light beam.

In some solutions, a mount matching the beam splitter 201, the first folding mirror 202, and the second folding mirror 203 is designed in advance, so that positions of the three are fixed.

The following provides a detection apparatus in this application.

This application further provides a detection apparatus, including a first receiving apparatus and a second receiving apparatus, and further including the foregoing optical apparatus, for example, the optical apparatus 100 or the optical apparatus 200. The optical apparatus is configured to split a first light beam into a second light beam and a third light beam. A receiving surface of the second light beam is coplanar with a receiving surface of the third light beam. The first receiving apparatus is configured to receive the first light beam, and the second receiving apparatus is configured to receive the second light beam. A receiving surface of the first receiving apparatus is coplanar with or parallel to a photosensitive surface of the second receiving apparatus.

The following provides a description by using an example in which the optical apparatus 100 is included. The optical apparatus 100 in the following may be replaced with the optical apparatus 200.

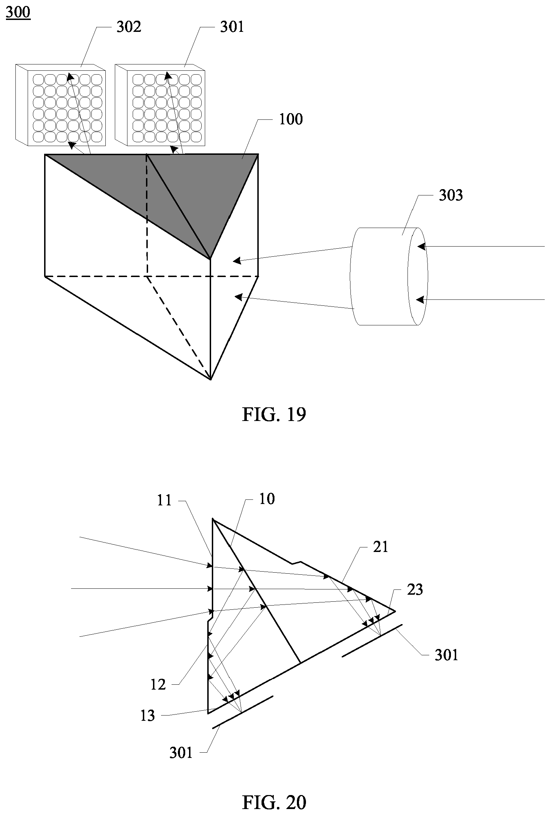

Refer to FIG. 19. A detection apparatus 300 includes a first receiving apparatus 301, a second receiving apparatus 302, and the optical apparatus 100. The first receiving apparatus 301 and the second receiving apparatus 302 are configured to obtain a detection result. The detection result includes one or more of an image, a point cloud, time of flight (time of flight, TOF) information, and a distance, a position, an angle, reflectance, or a color of a target.

The optical apparatus 100 is configured to split the first light beam into a second light beam and a third light beam. With reference to FIG. 20, imaging surfaces of the second light beam and the third light beam exiting from the optical apparatus 100 can be coplanar (or parallel) and have equal optical path lengths. Accordingly, the receiving surface of the first receiving apparatus 301 and a receiving surface of the second receiving apparatus 302 are coplanar (or parallel), so that a detection result obtained by the first receiving apparatus 301 and a detection result obtained by the second receiving apparatus 302 are highly registered, thereby reducing complexity of fusing the detection structure and improving resolution of the detection apparatus.

Further, the first receiving apparatus 301 and the second receiving apparatus 302 are mounted on a same circuit board. In this way, the two receiving apparatuses share a same circuit board, which facilitates manufacturing, mounting, and adjustment.

In a possible implementation, the first receiving apparatus 301 and the second receiving apparatus 302 are detectors, or are referred to as radar detectors. For example, the first receiving apparatus 301 and the second receiving apparatus 302 include one or more of the following detection units: a single-photon avalanche diode (single-photon avalanche diode, SPAD), a silicon photomultiplier (Silicon photomultiplier, SiPM), a multi-pixel photon counter (multi-pixel photon counter, MPPC), a semiconductor avalanche photodiode (avalanche photo detector, APD), a "positive-intrinsic-negative " (positive-intrinsic-negative, PIN) diode (or referred to as a P-type semiconductor-impurity-N-type semiconductor diode), or the like. In some solutions, a plurality of detection units may be arranged in an array to form an array detector. For example, the first receiving apparatus 301 and the second receiving apparatus 302 are SPAD array detectors.

In a possible implementation, the first receiving apparatus 301 and the second receiving apparatus 302 are image sensors. For example, the first receiving apparatus 301 and the second receiving apparatus 302 include one or more of the following photosensitive units: a complementary metal oxide semiconductor (complementary metal oxide semiconductor, CMOS), a charge-coupled device (charge-coupled device, CCD), a live MOS, and the like. For example, the first receiving apparatus 301 includes a CMOS image sensor (CMOS image sensor, CIS), and/or, the second sensor includes a CIS.

In some solutions, the CIS includes one or more of a color sensor, a mono sensor (mono sensor), and the like. The color sensor is, for example, a red green blue sensor (red green blue sensor, RGB sensor). The mono sensor can perform imaging in a low-illumination or even dark environment, thereby greatly improving detection effect of the detection apparatus in a low-illumination environment and improving detection precision.

In some solutions, the optical apparatus is an optical apparatus performing wavelength splitting. The first receiving apparatus 301 is an RGB sensor, and the second receiving apparatus 302 is a mono sensor. Alternatively, optionally, the second receiving apparatus 302 is an RGB sensor, and the first receiving apparatus is a mono sensor.

In a possible implementation, the first receiving apparatus 301 is a detector, and the second receiving apparatus 302 is an image sensor. Alternatively, the second receiving apparatus 302 is a detector, and the first receiving apparatus is an image sensor.

In a possible implementation, the detection apparatus 300 further includes an imaging lens 303. A light beam from object space is incident on the optical apparatus 100 after passing through the imaging lens 303.

In a possible implementation, the detection apparatus 300 further includes a filtering module. The filtering module is disposed between the imaging lens 303 and the first receiving apparatus 301, or is disposed between the imaging lens 303 and the second receiving apparatus 302. After the filtering module performs filtering, effectiveness of an optical signal received by the receiving apparatus is improved, which helps improve the detection precision of the detection apparatus.

This application further provides a detection apparatus, including a first emitting apparatus and a second emitting apparatus, and further including the foregoing optical apparatus, for example, the optical apparatus 100 or the optical apparatus 200.

The following provides a description by using an example in which the optical apparatus 100 is included. The optical apparatus 100 in the following may be replaced with the optical apparatus 200.

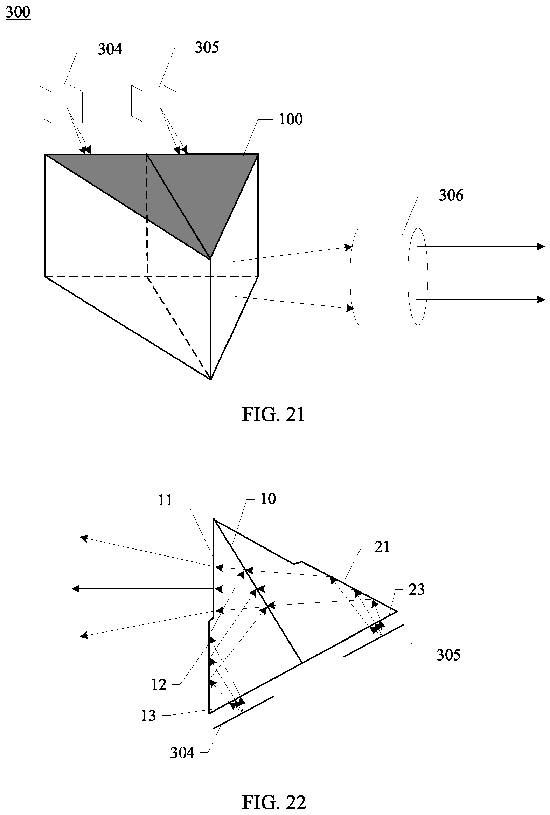

Refer to FIG. 21. A detection apparatus 300 includes a first emitting apparatus 304, a second emitting apparatus 305, and the optical apparatus 100. The first emitting apparatus 304 is configured to emit a first light beam, and the second emitting apparatus 305 is configured to emit a second light beam. The optical apparatus 100 is configured to combine the first light beam and the second light beam to obtain a combined light beam. The combined light beam is used to detect object space.

Optionally, an emitting surface of the first light beam is coplanar with or parallel to an emitting surface of the second light beam.

In a possible implementation, the first emitting apparatus 304 includes one or more of the following light sources: a vertical-cavity surface-emitting laser (vertical-cavity surface-emitting laser, VCSEL), a photonic crystal surface-emitting laser (photonic crystal surface-emitting laser, PCSEL), an edge emitting laser (edge emitting laser, EEL), a laser diode (laser diode, LD), a distributed feedback laser diode (distributed feedback LD, DFB-LD), a grating coupled sampling reflection laser diode (grating coupled sampling reflection LD, GCSR-LD), a micro opto electro mechanical system laser diode (micro opto electro mechanical system LD, MOEMS-LD), or the like.

In another possible implementation, the second emitting apparatus includes one or more of the following light sources: a VCSEL, a PCSEL, an EEL, an LD, a DFB-LD, a GCSR-LD, an MOEMS-LD, or the like.

In another possible implementation, with reference to FIG. 22, a light exit surface of the first emitting apparatus 304 is coplanar with or parallel to a light exit surface of the second emitting apparatus 305.

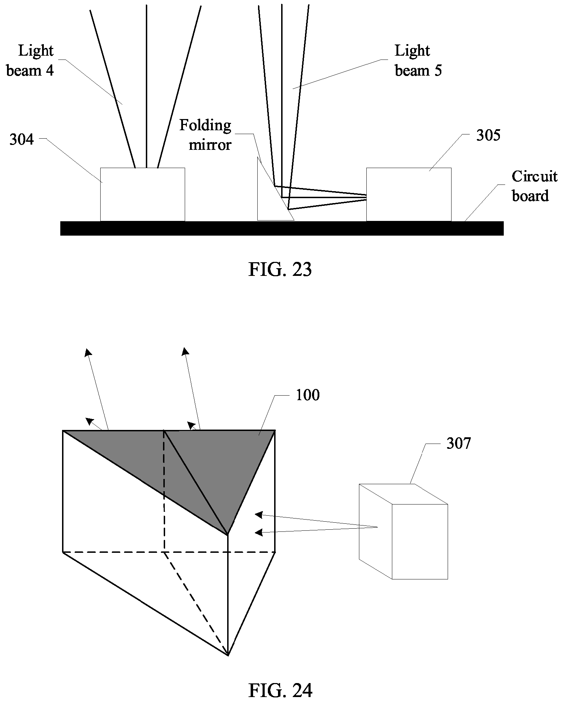

In another possible implementation, with reference to FIG. 23, the light exit surface of the first emitting apparatus 304 is perpendicular to the light exit surface of the second emitting apparatus 305. However, a folding mirror is disposed to fold one of the light beams, so that the emitting surface of the first light beam is equivalently parallel to the emitting surface of the second light beam.

In another possible implementation, the first emitting apparatus 304 and the second emitting apparatus 305 are mounted on a same circuit board. In this way, the two emitting apparatuses share a same circuit board, which facilitates manufacturing, mounting, and adjustment.

In another possible implementation, the detection apparatus 300 further includes an optical lens 306. The combined light beam passes through the optical lens 306 and then illuminates object space.

This application further provides a detection apparatus, including an emitting apparatus and the foregoing optical apparatus, for example, the optical apparatus 100 or the optical apparatus 200.

Refer to FIG. 24. This application further provides a detection apparatus, including an emitting apparatus 307 and the foregoing optical apparatus, for example, the optical apparatus 100 or the optical apparatus 200. The emitting apparatus 307 is configured to generate an emitting light beam. The emitting beam is split by the optical apparatus 100 to obtain two sub-beams, and the two sub-beams are used to detect object space. The optical apparatus 100 can double a quantity of emission lines, thereby improving detection efficiency.

This application further provides a lidar. The lidar includes the foregoing optical apparatus, for example, the optical apparatus 100 or the optical apparatus 200. The optical apparatus is configured to perform beam splitting. Optionally, the lidar further includes a laser and a detector. The laser is configured to emit detection light to object space. A light beam incident on the optical apparatus 100 includes an echo of the detection light, and the light beam is used to obtain information about a target in the object space. The detector is configured to receive a light beam passing through the optical apparatus 100, to obtain information about the target in the object space. The information about the target includes one or more of a distance, a position, an angle, coordinates, reflectance, reflection intensity, a color, a speed, or the like of the target.

This application further provides a lidar. The lidar includes the foregoing optical apparatus, for example, the optical apparatus 100 or the optical apparatus 200. The optical apparatus is configured to perform beam combining. Optionally, the lidar further includes a laser and a detector. The laser is configured to emit at least two beams of detection light to object space. The at least two beams of detection light are incident on a beam combining apparatus to obtain a combined light beam. The combined light beam is configured to detect the object space. The detector is configured to receive an echo of the combined light beam to obtain information about a target in the object space.

This application further provides a lidar. The lidar includes the detection apparatus 300 shown in FIG. 19. In some solutions, the lidar further includes a laser. The laser is configured to generate an emitting light beam, and the emitting light beam is used to detect object space. The detection apparatus 300 is configured to receive a first light beam, and the first light beam includes an echo of the emitting light beam.

This application further provides a lidar, including the detection apparatus 300 shown in FIG. 21 and FIG. 24. In some solutions, the lidar further includes a detector. The detector is configured to receive a return signal from object space, and the return signal includes an echo of a combined light beam emitted by the detection apparatus.

An embodiment of this application further provides a terminal. The terminal includes the foregoing optical apparatus, the foregoing detection apparatus, or the foregoing lidar.

Optionally, the terminal may be an intelligent terminal or a transportation means such as a vehicle, an unmanned aerial vehicle, or a robot, or the terminal may be an industrial device. It should be understood that the terminal in this application may include an intelligent terminal or a transportation means such as a vehicle, a robot, an unmanned aerial vehicle, a ship, or a boat. The vehicle is a vehicle in a broad sense, and may be a transportation vehicle (for example, a commercial vehicle, a passenger vehicle, a motorcycle, a flight vehicle, or a train), an industrial vehicle (for example, a forklift, a trailer, or a tractor), an engineering vehicle (for example, an excavator, a bulldozer, or a crane), an agricultural device (for example, a lawn mower or a harvester), or the like. For another example, the robot may be a robot such as an automated guided vehicle (automated guided vehicle, AGV), a walkable conversational robot, or a service robot. The industrial device is, for example, an industrial robot or a robotic arm. The entertainment device is, for example, a virtual reality (virtual reality, VR) device, a mixed reality (mixed reality, MR) device, or a 4D cinema cockpit.

Optionally, there are a plurality of possible implementations of a mounting position of the lidar. For example, the lidar is mounted on a platform of a dashboard of the vehicle, or is mounted on a top of a cockpit, or may be mounted on one or more of a head of the vehicle, a side of the vehicle, a tail of the vehicle, or the like.

In the descriptions of this application, orientation or position relationships indicated by terms "center", "upper", "lower", "vertical", "horizontal", "left", "right", "inside", "outside", "side", and the like are orientation or position relationships based on the accompanying drawings, and are merely intended for ease of describing this application and simplifying the description, but does not indicate or imply that an indicated apparatus or element needs to have a specific orientation or needs to be construed and operated in a specific orientation. Therefore, such terms should not be understood as a limitation on this application. It should be understood that the Z direction, the Y direction, the X direction, and the like mentioned in some embodiments of this application are referred to by using an XYZ rectangular coordinate system, to facilitate description of features in this solution, but does not indicate or imply that an indicated apparatus or element needs to have a specific orientation or needs to be construed and operated in a specific orientation.

In embodiments of this application, the term "example", "for example", or the like is used to represent giving an example, an illustration, or a description. Any embodiment or design scheme described as an "example" or "for example" in this application should not be explained as being more preferred or having more advantages than another embodiment or design scheme. Exactly, use of the word "example" or "for example" is intended to present a related concept in a specific manner.

In embodiments of this application, "at least one" means one or more, and "a plurality of" means two or more. "At least one of the following items (pieces)" or a similar expression thereof means any combination of these items, including any combination of singular items (pieces) or plural items (pieces). For example, at least one of a, b, or c may indicate: a, b, c, (a and b), (a and c), (b and c), or (a, b, and c), where a, b, and c may be singular or plural. The term "and/or" describes an association between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects.

In addition, unless otherwise stated, ordinal numbers such as "first" and "second" in embodiments of this application are for differentiation between a plurality of objects, but are not intended to limit an order, a time sequence, priorities, or importance of the plurality of objects.

## Claims

1. A beam splitting apparatus, comprising a first prism and a second prism, wherein
the first prism comprises an incident surface, a first surface, a first reflective surface, and a first exit surface, wherein the first surface and the first exit surface are perpendicular to each other to form a first right angle, and the first reflective surface and the incident surface are opposite to the first right angle;
the second prism comprises a second surface, a second reflective surface, and a second exit surface, wherein the second surface and the second exit surface are perpendicular to each other to form a second right angle, the second reflective surface is opposite to the second right angle, and the first surface is attached to the second surface to form a beam splitting surface; and
the beam splitting surface is configured to reflect and transmit an incident light beam, the first reflective surface is configured to reflect a light beam reflected by the beam splitting surface, and the second reflective surface is configured to reflect a light beam transmitted by the beam splitting surface, wherein
a first angle, a second angle, and a third angle satisfy: a sum of the first angle and 90° is twice the second angle, and the third angle is equal to the second angle; and the first angle is an included angle between the incident surface and the beam splitting surface, the second angle is an included angle between the first exit surface and the first reflective surface, and the third angle is an included angle between the second exit surface and the second reflective surface.

2. The beam splitting apparatus according to claim 1, wherein the first prism and the second prism are attached together through the beam splitting surface.

3. The beam splitting apparatus according to claim 1 or 2, wherein
the beam splitting surface is configured to split a first light beam entering from the incident surface into a second light beam and a third light beam, the second light beam is a reflected light beam, and the third light beam is a transmitted light beam;
the first reflective surface is configured to reflect the second light beam to the first exit surface;
the second reflective surface is configured to reflect the third light beam to the second exit surface; and
a receiving surface of a principal optical axis of the second light beam exiting through the first exit surface is coplanar with a receiving surface of a principal optical axis of the third light beam exiting through the second exit surface, and a transmission path of the second light beam and a transmission path of the third light beam are axially symmetric with respect to the beam splitting surface.

4. The beam splitting apparatus according to claim 3, wherein the first light beam is perpendicular to the incident surface.

5. The beam splitting apparatus according to any one of claims 1 to 4, wherein the incident surface is coplanar with the first reflective surface or the incident surface is parallel to the first reflective surface, the first angle is 30°, and the second angle is 60°.

6. The beam splitting apparatus according to any one of claims 1 to 5, wherein a minimum incident angle of the light beam reflected by the beam splitting surface on the first reflective surface is greater than or equal to a total reflection angle of the first reflective surface.

7. The beam splitting apparatus according to any one of claims 1 to 6, wherein a minimum incident angle of the light beam transmitted by the beam splitting surface on the second reflective surface is greater than or equal to a total reflection angle of the second reflective surface.

8. The beam splitting apparatus according to any one of claims 1 to 5, wherein the first reflective surface is coated with a reflective film.

9. The beam splitting apparatus according to claim 8, wherein the second reflective surface is coated with a reflective film.

10. The beam splitting apparatus according to any one of claims 1 to 9, wherein the first surface and/or the second surface are/is provided with a beam splitting film.

11. The beam splitting apparatus according to claim 10, wherein the beam splitting film comprises one or more of a wavelength beam splitting film, an intensity beam splitting film, and a polarization beam splitting film.

12. The beam splitting apparatus according to any one of claims 1 to 11, wherein a wavelength of the light beam reflected by the beam splitting surface is different from a wavelength of the light beam transmitted by the beam splitting surface; and
an optical path length of the light beam reflected by the beam splitting surface within the beam splitting apparatus is the same as an optical path length of the light beam transmitted by the beam splitting surface within the beam splitting apparatus.

13. The beam splitting apparatus according to any one of claims 1 to 12, wherein the beam splitting surface is configured to reflect a light beam of a first wavelength and transmit a light beam of a second wavelength, and a magnitude relationship between a first distance and a second distance is the same as a magnitude relationship between the first wavelength and the second wavelength, wherein
the first distance is a distance from a beam splitting center to the first exit surface, the second distance is a distance from the beam splitting center to the second exit surface, and the beam splitting center is an intersection point between the beam splitting surface and a principal optical axis of a light beam incident on the beam splitting surface.

14. The beam splitting apparatus according to any one of claims 1 to 13, wherein the beam splitting surface is configured to reflect the light beam of the first wavelength and transmit the light beam of the second wavelength; and
a magnitude relationship between a third distance and a fourth distance is the same as the magnitude relationship between the first wavelength and the second wavelength, wherein
the third distance is a distance from the beam splitting center to the first reflective surface, and the fourth distance is a distance from the beam splitting center to the second reflective surface; and
the beam splitting center is an intersection point between the beam splitting surface and an optical axis of the light beam incident on the beam splitting surface.

15. The beam splitting apparatus according to any one of claims 1 to 14, wherein the beam splitting surface is configured to reflect the light beam of the first wavelength and transmit the light beam of the second wavelength; and
a magnitude relationship between a refractive index of the first prism and a refractive index of the second prism is opposite to the magnitude relationship between the first wavelength and the second wavelength.

16. A beam combining apparatus, comprising a first prism and a second prism, wherein
the first prism comprises a first incident surface, a first surface, a first reflective surface, and an exit surface, wherein the first surface and the first incident surface are perpendicular to each other to form a first right angle, and the first reflective surface and the exit surface are opposite to the first right angle;
the second prism comprises a second incident surface, a second surface, and a second reflective surface, wherein the second surface and the second incident surface are perpendicular to each other to form a second right angle, and the second reflective surface is opposite to the second right angle; and
the first surface is attached to the second surface to form a beam combining surface, wherein the beam combining surface is configured to reflect a light beam reflected by the first reflective surface and transmit a light beam reflected by the second reflective surface to obtain a combined light beam, and the combined light beam exits from the exit surface, wherein
a first angle, a second angle, and a third angle satisfy: a sum of the first angle and 90° is twice the second angle, and the third angle is equal to the second angle; and the first angle is an included angle between the exit surface and the beam combining surface, the second angle is an included angle between the first incident surface and the first reflective surface, and the third angle is an included angle between the second incident surface and the second reflective surface.

17. The beam combining apparatus according to claim 16, wherein the first prism and the second prism are attached together through the beam combining surface.

18. The beam combining apparatus according to claim 16 or 17, wherein
the first reflective surface is configured to reflect a first light beam to the beam combining surface, and the first light beam enters the first prism through the first incident surface;
the second reflective surface is configured to reflect a second light beam to the beam combining surface, the second light beam enters the second prism through the second incident surface, and an emitting surface of the first light beam incident on the first incident surface is coplanar with an emitting surface of the second light beam incident on the second incident surface; and
the beam combining surface is configured to reflect the first light beam passing through the first reflective surface and transmit the second light beam passing through the second reflective surface to obtain a combined light beam, and an optical axis of the first light beam coincides with an optical axis of the second light beam after passing through the beam combining surface.

19. The beam combining apparatus according to any one of claims 16 to 18, wherein the combined light beam is perpendicular to the exit surface.

20. The beam combining apparatus according to any one of claims 16 to 19, wherein the exit surface is coplanar with the first reflective surface or the exit surface is parallel to the first reflective surface, the first angle is 30°, and the second angle is 60°.

21. The beam combining apparatus according to any one of claims 16 to 20, wherein a minimum incident angle of a light beam incident through the first incident surface on the first reflective surface is greater than or equal to a total reflection angle of the first reflective surface; or
the first reflective surface is coated with a reflective film.

22. The beam combining apparatus according to any one of claims 16 to 21, wherein a minimum incident angle of a light beam incident through the second incident surface on the second reflective surface is greater than or equal to a total reflection angle of the second reflective surface; or
the second reflective surface is coated with a reflective film.

23. The beam combining apparatus according to any one of claims 16 to 22, wherein the first surface and/or the second surface are/is provided with a beam splitting film.

24. The beam combining apparatus according to claim 23, wherein the beam splitting film comprises one or more of a wavelength beam splitting film, an intensity beam splitting film, and a polarization beam splitting film.

25. The beam combining apparatus according to any one of claims 16 to 24, wherein a wavelength of the light beam incident through the first incident surface is different from a wavelength of the light beam incident through the second incident surface; and
an optical path length of the light beam incident through the first incident surface within the beam combining apparatus is the same as an optical path length of the light beam incident through the second incident surface within the beam combining apparatus.

26. The beam combining apparatus according to any one of claims 16 to 25, wherein the wavelength of the light beam incident through the first incident surface is a first wavelength, the wavelength of the light beam incident through the second incident surface is a second wavelength, and a magnitude relationship between a first distance and a second distance is the same as a magnitude relationship between the first wavelength and the second wavelength, wherein
the first distance is a distance from a beam combining center to the first incident surface, the second distance is a distance from the beam combining center to the second incident surface, and the beam combining center is an intersection point between the beam combining surface and a principal optical axis of a light beam incident on the beam combining surface.

27. The beam combining apparatus according to any one of claims 16 to 26, wherein the wavelength of the light beam incident through the first incident surface is the first wavelength, and the wavelength of the light beam incident through the second incident surface is the second wavelength; and
a magnitude relationship between a third distance and a fourth distance is the same as the magnitude relationship between the first wavelength and the second wavelength, wherein
the third distance is a distance from the beam combining center to the first reflective surface, and the fourth distance is a distance from the beam combining center to the second reflective surface; and
the beam combining center is an intersection point between the beam combining surface and an optical axis of the light beam incident on the beam combining surface.

28. The beam combining apparatus according to any one of claims 16 to 27, wherein the wavelength of the light beam incident through the first incident surface is the first wavelength, and the wavelength of the light beam incident through the second incident surface is the second wavelength; and
a magnitude relationship between a refractive index of the first prism and a refractive index of the second prism is opposite to the magnitude relationship between the first wavelength and the second wavelength.

29. A detection apparatus, wherein the detection apparatus comprises a first receiving apparatus, a second receiving apparatus, and the beam splitting apparatus according to any one of claims 1 to 15;
the beam splitting apparatus is configured to split a first light beam into a second light beam and a third light beam, and a receiving surface of the second light beam is coplanar with a receiving surface of the third light beam; and
the first receiving apparatus is configured to receive the first light beam, the second receiving apparatus is configured to receive the second light beam, and a photosensitive surface of the first receiving apparatus is coplanar with a photosensitive surface of the second receiving apparatus.

30. A lidar, wherein the lidar comprises a laser and the detection apparatus according to claim 29;
the laser is configured to generate an emitting light beam, and the emitting light beam is used to detect object space; and
the detection apparatus is configured to receive a first light beam, and the first light beam comprises an echo of the emitting light beam.

31. A detection apparatus, wherein the detection apparatus comprises a first emitting apparatus, a second emitting apparatus, and the beam combining apparatus according to any one of claims 16 to 28;
the first emitting apparatus is configured to emit a first light beam, the second emitting apparatus is configured to emit a second light beam, and an emitting surface of the first light beam is coplanar with an emitting surface of the second light beam; and
the beam combining apparatus is configured to combine the first light beam and the second light beam to obtain a combined light beam, and the combined light beam is used to detect object space.

32. A lidar, wherein the lidar comprises a detector and the detection apparatus according to claim 31, wherein
the detector is configured to receive a return signal from object space, and the return signal comprises an echo of a combined light beam emitted by the detection apparatus.

33. A terminal, wherein the terminal comprises the beam splitting apparatus according to any one of claims 1 to 15, or comprises the beam combining apparatus according to any one of claims 16 to 28, or comprises the detection apparatus according to claim 29 or 31, or comprises the lidar according to claim 30 or 32.

34. The terminal according to claim 33, wherein the terminal is a vehicle, a robot, or an unmanned aerial vehicle.
